# EUROPÄISCHE PATENTSCHRIFT

(11) **EP 1 966 661 B1**
(45) Veröffentlichungstag und Bekanntmachung des Hinweises auf die Patenterteilung: **14.09.2011**
(21) Anmeldenummer: 06847035.0
(22) Anmeldetag: 20.12.2006
(51) Int. Cl.: G05B 19/19, G05B 19/41, G05B 19/42, B25J 9/16

(54) **VERFAHREN UND VORRICHTUNG ZUM EINRICHTEN EINER BAHNKURVE EINER ROBOTERVORRICHTUNG**
METHOD AND APPARATUS FOR ESTABLISHING A TRAJECTORY OF A ROBOT DEVICE
PROCEDE ET DISPOSITIF POUR ETABLIR UNE TRAJECTOIRE DE ROBOT

(30) Priorität: 20.12.2005 DE 102005060967
(43) Veröffentlichungstag der Anmeldung: 10.09.2008
(73) Patentinhaber: Technische Universität München, 80333 München (DE)
(72) Erfinder: VOGL, Wolfgang, 85748 Garching (DE)
(74) Vertreter: Barth, Stephan Manuel
(86) Internationale Anmeldenummer: PCT/EP2006/070023
(87) Internationale Veröffentlichungsnummer: WO 2007/071736

(56) Entgegenhaltungen:
- EP-A- 1 510 282
- US-A1- 2005 149 231
- US-A1- 2005 251 290
- WAKITA Y ET AL: "Robot teaching using projection function" INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA,IEEE, US, Bd. 3, 13. Oktober 1998 (1998-10-13), Seiten 1944-1949, XP010311432 ISBN: 0-7803-4465-0

## Beschreibung

Die vorliegende Erfindung betrifft ein Verfahren und eine Vorrichtung zum Einrichten einer Bahnkurve einer Robotervorrichtung gemäß dem Oberbegriff des Anspruchs 1 bzw. 12, wie aus der US 2005/251290 A1 bekannt.

Wakita et al.: "Robot teaching using projection function" Intelligent Robots and Systems, proceedings, 13.10.1998 offenbart ein Roboterlehrverfahren, bei dem die von einem Bediener gelehrte Bahnkurve mittels einer Projektionseinrichtung direkt in den Arbeitsbereich des Roboters projiziert wird.

Aus der US 2005/0149231 A1 sind ein Verfahren und ein System zum Programmieren eines Industrieroboters bekannt, wobei ein simulierter Roboterweg auf ein Werkstück projiziert wird.

Die EP 1 510 282 A1 offenbart eine Vorrichtung zum remote-bearbeiten von Werkstücken mittels eines Laserbearbeitungsstrahls. Mittels einer Auswerteeinrichtung ist aufgrund der Erfassung einer Zeigermarke ein Einstellwert für die Steuerung der Stellvorrichtung für die Scanneroptik definierbar. Dieser Einstellwert wird bei der nachfolgenden Werkstückbearbeitung zur Einstellung der Scanneroptik herangezogen.

Die Herstellung einer Vielzahl von Produkten erfolgt heute zweckmäßigerweise durch Roboter und von Ihnen gerührte Werkzeuge. Bevor ein Roboter erstmals zur Herstellung einer neuen Serie von Werkstücken verwendet werden kann, müssen dessen Bewegungsabläufe programmiert werden. Dies erfordert einen relativ hohen Zeitaufwand. Der Zeitaufwand mag bei der Herstellung von Produkten in großer Stückzahl noch gerechtfertigt sein, ist aber bei der Bearbeitung von Einzelstücken oder der Herstellung von kleinen Serien häufig nicht mehr vertretbar. Notwendige Programmänderungen bei Abwandlungen der Produkte, auftretenden Störungen des Roboters und dessen Wartung bedingen oft eine aufwendige Änderung der Programmierung. Nachteilig ist auch, dass die Programmierung nur von einem eingewiesenen Fachmann durchgeführt werden kann.

Die Verfahren zur Programmierung können in zwei Typen unterschieden werden. In einem ersten Typ (offline) werden mittels eines Robotermodells die Bewegungsabläufe ohne den Roboter programmiert. Für die offline Programmierung sind dreidimensionale Modelle der zu bearbeitenden Werkstücke, der Arbeitsumgebung und des Roboters notwendig. Eine Erstellung und Anpassung dieser Daten erfordert einen erheblichen Aufwand. Ferner sind in der Regel Optimierungsschritte des programmierten Bewegungsablaufs am realen Roboter unvermeidbar, da sich meist die dreidimensionalen Modelle und die von ihnen abgebildete Realität unterscheiden. In dem zweiten Typ (online) wird direkt der Roboter programmiert. Eine Mehrzahl von Stützpunkten werden von dem Roboter manuell gesteuert angefahren und die Posen des Roboters abgespeichert. Die Auswahl der Stützpunkte und die manuelle Steuerung des Roboters bedarf jedoch eines speziell ausgebildeten Personals.

Ansätze zur Vereinfachung der anfänglichen Programmierung bestehen darin, mittels einer Kamera die Arbeitsumgebung und des Werkstücks aufzunehmen und auf einem Monitor oder Datenbrille darzustellen. Der Darstellung des Werkstücks wird eine simulierte Bahnkurve des Roboters überlagert. Ein entsprechendes Verfahren ist aus DE 103 05 384 A1 bekannt. Der dargestellte Ausschnitt hierbei wird durch die Orientierung des Werkstücks im Raum festgelegt. Der Programmierer erhält auf diese Weise eine Rückkopplung zwischen der von ihm programmierten Bahnkurve und deren Lage bezüglich des Werkstücks. Nachteiligerweise ist das Blickfeld durch die Abmessungen des Monitors bzw. der Datenbrille beschränkt. Bei größeren Werkstücken erfordert dies eine permanente Verschiebung des dargestellten Bildausschnittes. Hierbei verliert der Bediener den Überblick über die gesamte Bahnkurve. Ferner ist die Abbildung der Bahnkurve durch die Auflösung des Monitors und der Kamera begrenzt.

Die EP 1 215 017 A2 beschreibt ein Verfahren zum Einrichten einer Bahnkurve. An einem Roboter ist eine optische Vermessungseinrichtung bestehend aus einem Projektor und einer Kamera befestigt. In einem ersten Schritt wird das gesamte Werkstück von einem entfernten Punkt aufgenommen und die Aufnahme auf einer Anzeige dargestellt. Ein Bediener legt Vermessungspunkte entlang einer Bahnkurve mittels eines graphischen Werkzeugs und der Anzeige fest. Der Roboter wird schrittweise entlang der Vermessungspunkte geführt und die Vermessungseinrichtung zeichnet die Topologie des Werkstücks entlang der Bahnkurve auf. Die somit ausgemessene Bahnkurve dient zur späteren Führung des Roboters.

Eine Aufgabe der vorliegenden Erfindung ist es, ein Verfahren und eine Vorrichtung zu schaffen, welche eine einfache und verbesserte Einrichtung von Bahnkurven eines Roboters ermöglichen.

Die vorgenannte Aufgabe wird durch das erfindungsgemäße Verfahren nach Patentanspruch 1 und die Vorrichtung nach Patentanspruch 12 gelöst.

Ein Vorteil des erfindungsgemäßen Verfahrens besteht darin, dass ein Bediener unmittelbar an dem Werkstück die Bahnkurve einrichtet. Hierzu kann er auf intuitive Weise geeignete Stützpunkte durch Berühren der Oberfläche mit der Zeigereinrichtung festlegen. Ferner wird ihm dann auch die zwischen den Stützpunkten interpolierte Wegstrecke auf der Oberfläche durch die Projektion angezeigt. Hierbei erkennt er sofort, ob die Wahl der Stützpunkte und deren Lage geeignet sind die Bahnkurve festzulegen. Für eine Anpassung der Bahnkurve können Stützpunkte hinzugefügt, gelöscht oder verschoben werden. Vor einem erstmaligen Festlegen von Stützpunkten kann auch eine vorab bekannte Bahnkurve auf das Werkstück projiziert werden. Dies ist insbesondere dann von Vorteil, wenn zu erwarten ist, dass die bekannte Bahnkurve nur geringfügig angepasst werden muss. Die Verfahrensschritte können auch mehrfach iterativ wiederholt werden, bis eine für die Bearbeitung des Werkstücks geeignete Bahnkurve ermittelt ist.

Durch die Projektion der Bahnkurve auf die Oberfläche ist die Auflösung und Genauigkeit der Darstellung im Wesentlichen nur durch eine verwendete Projektionseinrichtung begrenzt. Diese ist wesentlich größer als die üblichen Auflösungen von Projektionsbrillen und/oder Bildschirmen von nur wenig mehr als 1000 x 1000 Punkten.

Ausgestaltungen des Verfahrens sehen vor, dass vor dem Positionieren der Zeigereinrichtung Verfahrensschritte entsprechend Ansprüche 2 und 3 durchgeführt werden.

Das Erfassen, dass das Muster auf den Kalibrierpunkt projiziert wird, kann durch eine externe Kamera oder durch eine anders geartete Bilderfassungseinrichtung erfolgen, die unter Anderem in der Projektionseinrichtung integriert ist.

Das Ermitteln einer Richtung von der Projektionseinrichtung zu dem Kalibrierpunkt basierend auf dem Muster kann in vielfältiger Weise erfolgen. Unter Anderem ist vorgesehen, die geschätzte Richtung solange anzupassen, bis das Muster mit dem Kalibrierpunkt räumlich überlagert ist. Ein weiteres Verfahren sieht vor einen Abstand zwischen dem projizierten Muster um dem Kalibrierpunkt auszuwerten. Ein drittes Verfahren erfasste die geometrischen Verzerrungen, die sich beim Projizieren auf die bekannte Form des Kalibrierpunktes ergeben. Aus diesen Verzerrungen wird die Abweichung der geschätzten Richtung zu der tatsächlichen Richtung zu dem Kalibrierpunkt bestimmt.

Ein Vorteil des beschriebenen Kalibrierverfahrens ergibt sich insbesondere bei mobilen Projektionseinrichtungen, die innerhalb kurzer Zeit eingerichtet werden sollen.

Eine Ausgestaltung des Verfahrens sieht vor, dass ein Abgleich des Koordinatensystems der Zeigereinrichtung, des Koordinatensystems der Projektionseinrichtung und gegebenenfalls von Erfassungseinrichtungen basierend auf einem Kalibrierobjekt, das eine Mehrzahl von Kalibrierpunkten aufweist, erfolgt. Die Koordinatensystem der potentiell mobilen Komponenten können somit untereinander kalibriert werden. Eine Kalibrieren eines der Systeme auf den Roboter ist nachfolgend ausreichend.

Das Verfahren sieht vor, die projizierten Bahnkurven optisch zu erfassen. Es werden abweichende Abschnitte der projizierten Bahnkurve bestimmt, in denen die projizierte Bahnkurve von der festgelegten Bahnkurve abweicht. Abweichungsmarkierungen werden an und/oder entlang der abweichenden Abschnitte projiziert. Das automatische Interpolieren nimmt eine vorgegebene Form der Oberfläche an, um entlang dieser Oberfläche die Wegstrecken zwischen zwei Stützpunkten zu bestimmen. Die Oberflächen können z. B. als eben, kugelförmig oder zylinderförmig angenommen werden. Die Form der Oberflächen kann auch durch ein dreidimensionales Modell, z. B. ein CAD-Modell, definiert werden. Im Allgemeinen wird sich jedoch eine Abweichung zwischen der angenommenen Oberfläche und der realen Oberfläche ergeben. Diese Abweichungen lassen sich beim Projizieren der Bahnkurve erkennen. Durch die Abweichungsmarkierungen wird der Bediener darauf hingewiesen, dass die dem automatischen Interpolieren zugrunde liegenden Oberflächen, Formen und/oder Interpolationsfunktionen geändert werden müssen und/oder eine größere Anzahl von Stützpunkten in diesem Bereich notwendig sind. Die Abweichungsmarkierungen können als Symbole projiziert werden. Eine andere Variante ist, in den abweichenden Abschnitten die Bahnkurve durch eine unterschiedliche Farbgestaltung zu den nicht abweichenden Abschnitten zu projizieren.

In einem automatisierten Verfahren kann die Bahnkurve solange angepasst werden, bis die bestimmte Abweichung unter einen vorbestimmten Schwellwert sinkt. Dies kann durch automatisches Hinzufügen von Stützpunkten oder Anpassen der Interpolationsfunktionen realisiert werden. Ferner wird erfindungsgemäß die Krümmung der Oberfläche basierend auf der Abweichung bestimmt werden und das automatische Interpolieren in Abhängigkeit der Krümmung erfolgen. Das optische Erfassen der projizierten Bahnkurven kann durch Triangulation erfolgen.

Eine weitere Ausgestaltung des erfindungsgemäßen Verfahrens sieht vor, ein Führen der Robotervorrichtung entlang der festgelegten Bahnkurve basierend auf einem kinematischen Modell der Robotervorrichtung zu simulieren. Es werden erste Punkte der Bahnkurve bestimmt, die die Robotervorrichtung beim simulierten Führen zu vorbestimmten Zeitpunkten erreicht. Entlang der Bahnkurve werden an den Koordinaten der ersten Punkte Zeitmarkierungen projiziert. Die vorbestimmten Zeitpunkte sind vorzugsweise äquidistant verteilt. Somit gibt der Abstand zwischen zwei Zeitmarkierungen ein Maß für die Geschwindigkeit des Roboters an, mit welcher der Manipulator zumindest in der Simulation entlang der Bahnkurve gerührt wird. Hierdurch erhält der Bediener die Möglichkeit, gegebenenfalls in die Robotersteuerung einzugreifen, um die Geschwindigkeit entlang einzelner Abschnitte gezielt anzupassen, damit der Manipulator mit gleichbleibender Geschwindigkeit entlang der Bahnkurve geführt wird.

In einer weiteren Ausgestaltung wird ebenfalls das Führen der Robotervorrichtung entlang der festgelegten Bahnkurve basierend auf einem kinematischen Modell der Robotervorrichtung simuliert. Hierbei werden die zweiten Punkte der Bahnkurve bestimmt, für die die Robotervorrichtung Posen einnehmen muss, welche zur Kollision mit dem Werkstück und/oder einer Arbeitsumgebung führen. Ferner werden zweite Punkte bestimmt, für welche das Simulieren ergibt, dass die Posen für die Robotereinrichtung uneinnehmbar sind. Kollisionsmarkierungen werden dann entlang der projizierten Bahnkurve an den Koordinaten der zweiten Punkte projiziert. Hierdurch erhält der Bediener einen unmittelbaren Hinweis darauf, dass die von ihm angestrebte Bahnkurve nicht realisierbar ist.

Gemäß einer weiteren Ausgestaltung wird die Bahnkurve mittels einer mobilen Projektionseinrichtung projiziert, die nahe oder anstelle eines Manipulators an der Robotervorrichtung fest oder lösbar angeordnet ist. Dies lässt eine flexiblere Anordnung der Projektionseinrichtung zu. Ferner nimmt dabei die Robotervorrichtung bereits eine Pose an, die zumindest grob den später während dem Betrieb eingenommenen Posen entspricht.

Die zu bearbeitende Oberfläche kann in mehrere Segmente aufgeteilt werden und für jedes Segment wird die mobile Projektionseinrichtung durch die Robotervorrichtung automatisch in eine Pose geführt, von welcher aus die mobile Projektionseinrichtung auf jeden Punkt des ausgewählten Segments projizieren kann und die Projektionseinrichtung bei dieser Pose einen geringen Abstand zur Oberfläche aufweist, bevor durch die Zeigereinrichtung und deren Erfassung eine Mehrzahl von Stützpunkten in dem Segment der Oberfläche festgelegt werden. Dieses Verfahren ermöglicht das Aufteilen der Darstellung einer Bahnkurve in mehrere Abschnitte. Bei sehr großen und/oder komplex strukturierten Werkstücken ist unter Umständen eine Projektion von einer einzigen Pose oder einem stationär angeordneten Projektor nicht mehr möglich. Zudem wird durch den kleineren abzudeckenden Winkelbereich des Projektors eine höhere Auflösung und Darstellungsgenauigkeit bei der Projektion ermöglicht.

Eine weitere Ausgestaltung sieht vor, dass zuerst mit einer stationären Projektionseinrichtung Orientierungspunkte auf die zu bearbeitende Oberfläche projiziert werden. Die mobile Projektionseinrichtung wird zusammen mit einer optischen Erfassungseinrichtung mittels der Robotervorrichtung automatisch in eine Pose geführt, von welcher aus die optische Erfassungseinrichtung mindestens drei Orientierungspunkte erfasst. Der Bediener kann zuvor die Oberfläche in Segmente unterteilen und deren Abmessungen durch drei oder mehr Orientierungspunkte festlegen. Die Robotervorrichtung kann dann anhand von jeweils drei projizierten Orientierungspunkten die mobile Projektionseinrichtung in die gewünschten Posen verfahren. Ferner ist es möglich, anhand der drei Orientierungspunkte eine Kalibrierung der optischen Erfassungseinrichtung basierend auf einem Unterschied zwischen den festgelegten Koordinaten der Orientierungspunkte und den durch die optische Erfassungseinrichtung erfassten Koordinaten der projizierten Orientierungspunkte durchzuführen. Hierbei kann auch eine Anpassung des Robotermodells erfolgen.

In einer anderen Ausgestaltung werden eine Mehrzahl von reflektierenden oder selbstleuchtenden Orientierungsmarkern auf der zu bearbeitenden Oberfläche an bekannten Koordinaten angeordnet. Die optische Erfassungseinrichtung erfasst die Koordinaten der Orientierungsmarker. Eine Kalibrierung der optischen Erfassungseinrichtung und/oder der Projektionseinrichtung und/oder des Robotermodells erfolgt basierend auf einem Unterschied zwischen den bekannten Koordinaten der Orientierungsmarker und den erfassten Koordinaten der Orientierungsmarker. Die reflektierenden Marker können durch einen Lasertracker beleuchtet werden, der an der Erfassungseinrichtung oder der Projektionseinrichtung angeordnet ist. Ferner kann eine zusätzliche optische Erfassungseinrichtung zum Erfassen der Koordinaten der Orientierungsmarker bereitgestellt werden. Die Anordnung der Orientierungsmarker kann mit einer kalibrierten Vermessungseinrichtung ausgemessen werden, um die Koordinaten der Orientierungsmarker zu bestimmen.

In einer Erweiterung werden die Koordinaten der Stützpunkte mit sechs Koordinaten zur Beschreibung der räumlichen Lage und der Orientierung festgelegt. Die Orientierung wird unter anderem für die Ausrichtung des Manipulators bezüglich der zu bearbeitenden Oberfläche in manchen Anwendungen benötigt. Der Verlauf der Orientierung entlang der Bahnkurve kann durch automatische Interpolation ermittelt werden. Hierbei erfolgt zweckmäßigerweise eine Interpolation basierend auf den drei Koordinaten, z. B. Winkelkoordinaten, die die Orientierung festlegen. In einer Ausgestaltung werden richtungsangebende Markierungen entsprechend dem Orientierungsverlauf entlang der Bahnkurve auf die Oberfläche projiziert.

Die erfindungsgemäße Vorrichtung gemäß Anspruch 12 weist eine Zeigereinrichtung, eine Verfolgungseinrichtung zum Erfassen der Koordinaten und/oder der Orientierung der Zeigereinrichtung, eine Datenverarbeitungseinrichtung zum automatischen Interpolieren von Wegstrecken zwischen jeweils zwei benachbarten Stützpunkten zum Festlegen der Bahnkurve und eine Projektionseinrichtung zum Projizieren der Bahnkurve auf die Oberfläche auf. Die Projektionseinrichtung kann mindestens eine Laserlichtquelle und eine Ablenkeinrichtung zum Richten mindestens eines Laserlichtstrahls aufweisen. Vorzugsweise weist sie mehrere Laserlichtquellen zum

Darstellen verschiedener Farben auf. Die Ablenkeinrichtungen können rein mechanisch und/oder optomechanisch realisiert sein.

Es wird eine optische Erfassungseinrichtung zum Erfassen einer projizierten Bahnkurve bereitgestellt. Die Projektionseinrichtung und/oder die optische Erfassungseinrichtung können stationär angeordnet sein. Die Projektionseinrichtung und/oder die optische Erfassungseinrichtung können ebenso fest und/oder lösbar an der Robotervorrichtung angeordnet sein.

Die nachfolgende Erfindung wird anhand bevorzugter Ausführungsbeispiele zusammen mit den nachfolgenden Figuren beschrieben. In den Figuren zeigen:
- Figur 1:: eine schematische Darstellung eines ersten Beispiels auf dem Weg zur Erfindung,
- Figur 2:: ein Flussdiagramm eines beispielhaften Verfahrens zu Fig. 1,
- Figur 3:: eine schematische Darstellung einer Ausführungsform,
- Figur 4:: ein Flussdiagramm eines weiteren beispielhaften Verfahrens zu Fig. 3,
- Figur 5:: eine Seitenansicht zu Figur 4,
- Figur 6:: eine schematische Darstellung einer weiteren Ausführungsform,
- Figur 7:: eine schematische Darstellung einer weiteren Ausführungsform,
- Figur 8:: ein Flussdiagramm eines beispielhaften Verfahrens zu Figur 7,
- Figur 9:: ein Flussdiagramm beispielhafter zusätzlicher Verfahrensschritte,
- Figur 10:: eine Illustration zu dem beispielhaften Verfahrens von Figur 9,
- Figur 11:: ein Flussdiagramm beispielhafter zusätzlicher Verfahrensschritte,
- Figur 12:: eine Illustration einer beispielhaften Ausgestaltung der vorhergehenden Verfahren,
- Figur 13:: eine Ausführungsform zur Kalibrierung; und
- Figur 14:: eine weitere Ausführungsform zur Kalibrierung.

Gleiche Bezugszeichen beschreiben gleiche oder funktionsgleiche Elemente.

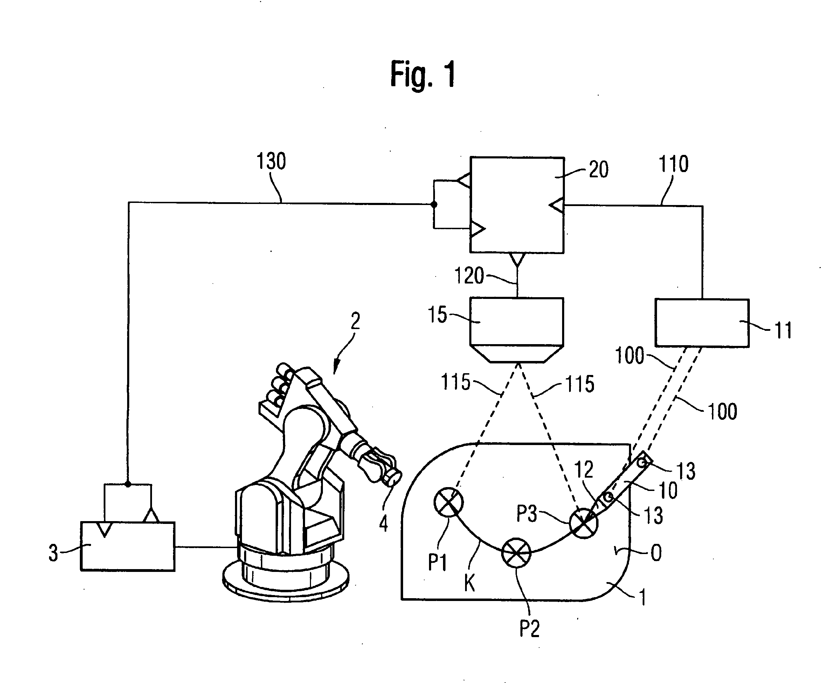

In Fig. 1 ist schematisch eine Vorrichtung zum Einrichten einer Bahnkurve K eines Roboters 2 gemäß einem ersten Beispiel auf dem Weg zur Erfindung dargestellt. Ein Werkstück 1 mit einer ebenen oder gekrümmten Oberfläche O soll mit dem Roboter 2 und dem an ihm befestigten Manipulator 4 bearbeitet werden. Eine Robotersteuerung 3 steuert hierzu den Roboter 2 gemäß einem noch zu bestimmenden Programmablauf an, so dass der Manipulator 4 entlang einer gewünschten Bahnkurve geführt wird. Der Manipulator 4 steht hierbei für eines oder mehrere bekannte Werkzeuge zum Schneiden, Kleben, Schweißen etc. Der in Fig. 1 dargestellte Roboter 2 ist exemplarisch für eine Vielzahl von verschiedenen Vorrichtungen, welche zum Führen des Manipulators 4 geeignet sind.

In dem dargestellten Beispiel soll der Manipulator 4 entlang der Kurve K über die Oberfläche O des Werkstücks 1 geführt werden. Die Bahnkurve K, wie auch andere Bahnkurven, lassen sich durch eine Mehrzahl von Stützpunkten P1, P2,... festgelegen. Geeignete Interpolationsalgorithmen oder Interpolationsfunktionen beschreiben dann die Wegstrecken zwischen zwei benachbarten Stützpunkten P1, P2. Eine komplexe Bahnkurve K mit einer Vielzahl an verschiedenen Krümmungen benötigt eine größere Anzahl von Stützwerten P1, P2. Das nachfolgend beschriebene Verfahren befasst sich vorwiegend mit der Festlegung dieser Stützpunkte P1, P2. Einem Bediener wird eine Zeigeeinrichtung 10, z. B. ein Stift 10 mit einer Spitze 12, zur Verfügung gestellt. Eine Verfolgungseinrichtung 11 oder Trackingeinrichtung erfasst die Koordinaten und gegebenenfalls auch die Orientierung des Stifts 10 im Raum. Der Stift 10 weist dazu Markierungen auf, welche durch eine bildauflösende Einrichtung, z.B. eine Kamera, in einem Bild aufgenommen werden. Durch Vergleich der Position der Markierungen in dem Bild mit den realen Abständen der Markierungen auf dem Stift 10 wird die Position und Orientierung des Stifts 10 ermittelt.

Die Position und Orientierung des Stifts 10 kann auch basierend auf Laufzeitdifferenzen von Signalpulsen 100 bestimmt werden. Dazu sind eine Mehrzahl von Sendern 13 an dem Stift 10 angeordnet. Nachdem ein Triggersignal von der Verfolgungseinrichtung 11 ausgegeben wird, senden die Sender 13 an den Stift 10 einen Signalpuls. Aus der Laufzeit des Signalpulses bis zu der Verfolgungseinrichtung 11 und der Ausbreitungsgeschwindigkeit des Signalpulses, d.h. Schallgeschwindigkeit oder Lichtgeschwindigkeit, wird der Abstand zu den einzelnen Sendern 13 und damit die geometrische Lage des Stifts 10 im Raum bestimmt. Ebenso können beabstandete Empfänger anstelle oder zusätzlich zu den beabstandeten Sendern 13 verwendet werden. Ferner können auch die Sender 13 in der Verfolgungseinrichtung 11 integriert werden und der oder die Empfänger in dem Stift 10.

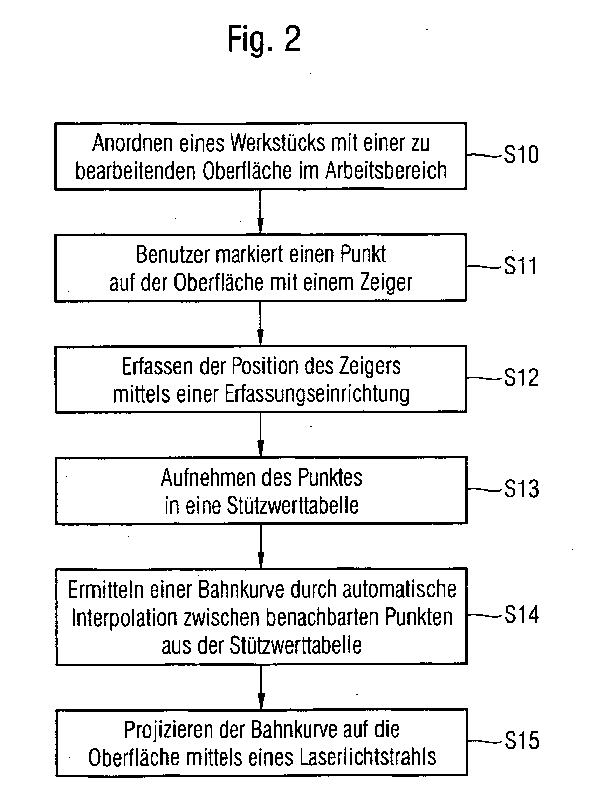

In Fig. 2 ist ein Flussdiagramm dargestellt, anhand dessen die Festlegung der Stützpunkte P1, P2,... durch einen Bediener erläutert wird. Zuerst wird das Werkstück 1 mit der zu bearbeitenden Oberfläche O im Arbeitsbereich des Roboters 2 angeordnet (S 10). Der Bediener berührt mit dem Stift 10 die Oberfläche O an den Punkten, welche er für geeignete Stützpunkte P1, P2,... hält (S11). Während der Bediener den Stift 10 durch den Raum bewegt, erfasst die Verfolgungseinrichtung 11 die Koordinaten und gegebenenfalls die Orientierung des Stifts 10, wie zuvor beschrieben (S12). Durch eine Betätigungseinrichtung, z.B. einen Taster an dem Stift 10, signalisiert der Bediener, dass der an der Oberfläche O berührte Punkt als Stützpunkt P1, P2,... in eine Stützwerttabelle aufgenommen werden soll (S13). Vorteilhafterweise kann die Betätigungseinrichtung in dem Stift 10 integriert sein und durch einen Andruck der Spitze 12 gegen die Oberfläche betätigt werden. Die von der Verfolgungseinrichtung 11 erfassten Koordinaten des Stifts 10 werden als Positionssignal 110 an eine Datenverarbeitungseinrichtung 20 weitergeleitet. Diese weist einen Speicher auf, um die einzelnen Stützpunkte P1, P2,... und deren Koordinaten in einer Stützwerttabelle abzuspeichern. Eine Funktionseinheit der Datenverarbeitungseinrichtung 20 bestimmt mittels Interpolation eine Bahnkurve K basierend auf den Stützpunkten P1, P2 (S14). Die Interpolation ermittelt die jeweiligen Wegstrecken zwischen zwei benachbarten Stützpunkten P1, P2. Die angewandten Interpolationsfunktionen können eine lineare Interpolationsfunktion zwischen den zwei benachbarten Stützpunkten P1, P2, eine polynomiale Interpolationsfunktion durch drei oder mehr Stützpunkte P1, P2,... usw. enthalten.

Die Datenverarbeitungseinrichtung 20 übermittelt ein Ansteuersignal 120 an einen Projektor 15, so dass der Projektor 15 die festgelegte Kurve K auf die Oberfläche O des Werkstücks 1 projiziert (S15). Der Bediener sieht somit unmittelbar die Form der von ihm festgelegten Bahnkurve K. Entlang dieser Bahnkurve K führt dann der Roboter 2 während dem Betrieb den über die Oberfläche O. Er erhält somit nicht nur eine Rückkopplung, welche Stützpunkte angefahren werden, sondern auch die Wegstrecken dazwischen. Weicht die dargestellte Bahnkurve K von einer gewünschten Bahnkurve ab, kann der Bediener durch Hinzufügen, Löschen oder Verschieben von Stützpunkten P1, P2,... die Bahnkurve K anpassen. Vorteilhafterweise projiziert der Projektor 15 gesonderte Markierungen an den Koordinaten der Stützpunkte P1, P2,... auf die Oberfläche O, z.B. Symbole, Kreuze, Kreise.

Nachdem eine geeignete Bahnkurve K festgelegt ist, wird die sie an die Robotersteuerung 3 übermittelt. Hierbei sind gegebenenfalls Koordinatentransformationen notwendig, die die Koordinaten der Stützpunkte und sonstiger Bahnpunkte von einem Koordinatensystem der Verfolgungseinrichtung 11 und des Projektors 15 in das Roboterkoordinatensystem umrechnen. Die Wegstrecken zwischen den einzelnen Stützpunkten P1, P2 können von der Datenverarbeitungseinrichtung 20 als einzelne Bahnpunkte in ausreichender Dichte an die Robotersteuerung 3 übermittelt werden. Falls die Robotersteuerung über ein geeignetes kinematisches Robotermodell verfügt, können ihr auch die entsprechenden Interpolationsfunktionen zu den einzelnen Wegstrecken übermittelt werden. Die Robotersteuerung 3 berechnet dann selbst die Wegstrecke zwischen den Stützpunkten P1, P2.

In dem in Fig. 2 beschriebenen Verfahren werden zuerst Stützpunkte festgelegt, bevor eine Bahnkurve projiziert wird. Häufig sind jedoch bereits eine Bahnkurve oder Stützpunkte vorab bekannt. Dies ist zum Beispiel der Fall, wenn eine Änderung einer Werkstückserie vorgenommen wird und diese mit dem gleichen Roboter bearbeitet werden soll. Hierbei kann der Roboter weitgehend entlang einer ursprünglichen Bahnkurve geführt werden, die für die ursprüngliche Werkstückserie geeignet war. Hierbei ist es nun zweckmäßig die ursprüngliche Bahnkurve auf das neue Werkstück zunächst zu projizieren, damit der Bediener die Abschnitte der ursprünglichen Bahnkurve erkennt, die geändert werden müssen. In diesen Abschnitten passt er die Stützpunkte an oder fügt neue Stützpunkte hinzu.

Die einzelnen Verfahrensschritte können mehrfach iterativ wiederholt werden, bis die Bahnkurve optimal angepasst ist.

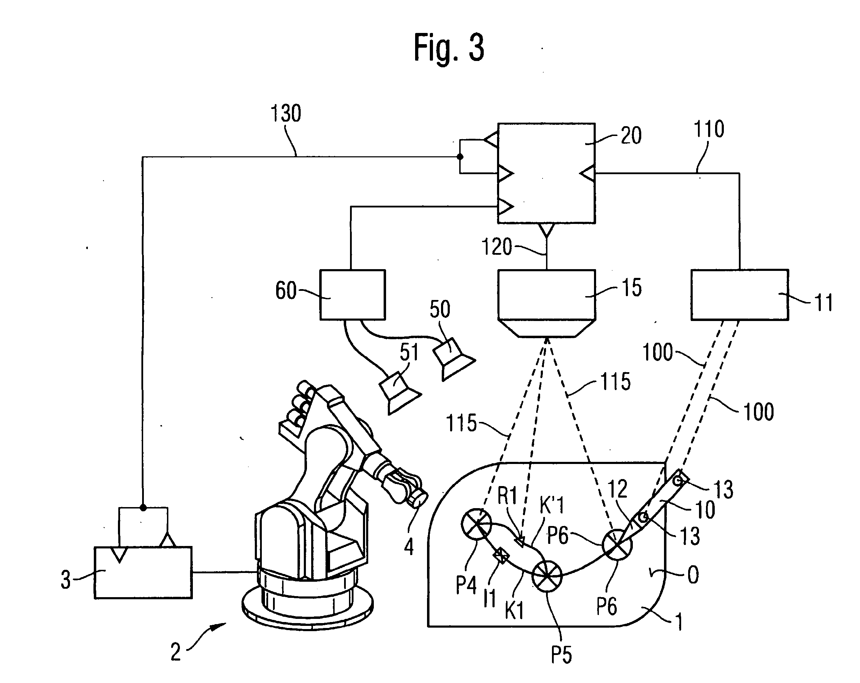

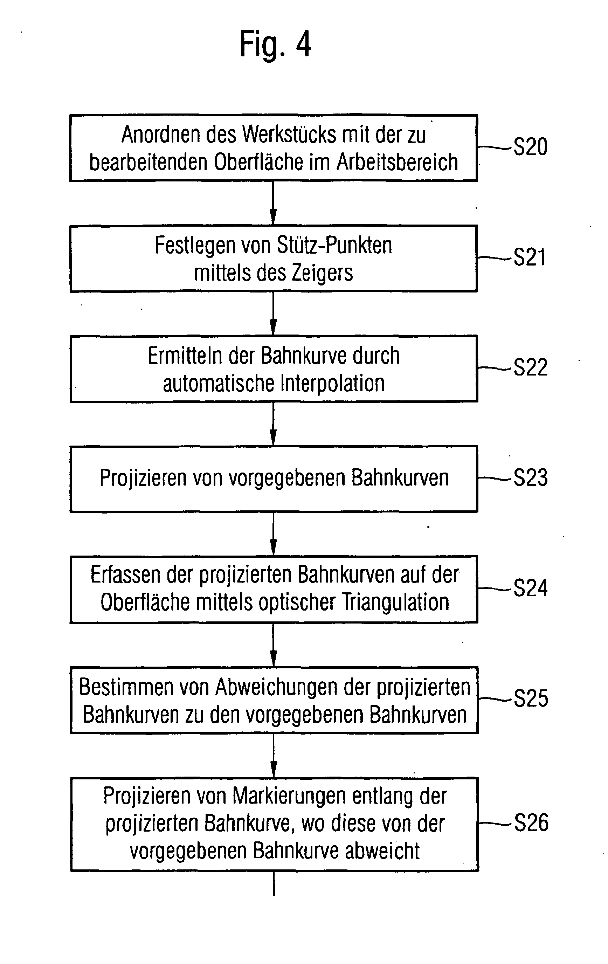

In Fig. 3 ist schematisch ein Ausführungsbeispiel und in Fig. 4 ein zugehöriges Verfahren als Flussdiagramm dargestellt. Auf der Oberfläche O des Werkstücks 1 legt ein Bediener mehrere Stützpunkte P1, P2, ... mittels des Stifts 10 in der zuvor beschriebenen Weise fest (S21). Die Datenverarbeitungseinrichtung 20 berechnet die durch die Stützpunkte P1, P2, ... und die vorbestimmten Interpolationsfunktionen die Bahnkurve K (S22). Die Bahnkurve K 1 bzw. entsprechende Steuerbefehle 120 werden an den Projektor 15 übermittelt. Dieser projiziert die Bahnkurve K 1 in die Richtung der Oberfläche O (S23). Diese wesentlichen Schritte stimmen mit den Verfahrensschritten des zuvor beschriebenen Beispiels überein.

Die Stützpunkte P1, P2, ... werden mit drei Koordinaten entsprechend dem dreidimensionalen Raum durch die Verfolgungseinrichtung 11 erfasst. Für die Bahnpunkte auf den interpolierten Wegstrecken zwischen den Stützpunkten P1, P2, ... werden ebenfalls drei Raumkoordinaten bestimmt. Die Interpolationsfunktion hat jedoch a priori keine Kenntnisse über die Krümmungen oder sonstigen Oberflächenbeschaffenheiten der Oberfläche O zwischen den Stützpunkten P4, P5.

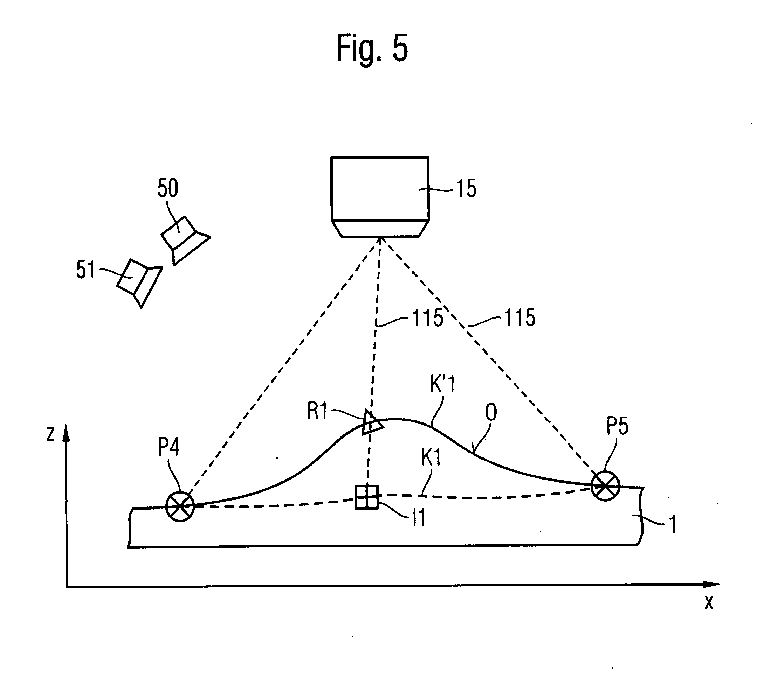

In Fig. 5 ist das Werkstück 1 in einer seitlichen Querschnittsansicht zwischen den Stützpunkten P4, P5 zugehörig zu der Draufsicht von Fig. 3 dargestellt. Es ist beispielhafterweise eine lineare Interpolation in der vertikalen Richtung, d.h. z-Richtung, zwischen den benachbarten Stützpunkten P4 und P5 verwendet. Dies führt zu der in Fig. 5 dargestellten geradlinigen Bahnkurve K1. Zwischen den Stützpunkten P4, P5 ist die Oberfläche O nach oben gewölbt. Die interpolierten Bahnpunkte I1 auf der Wegstrecke zwischen den Stützpunkten P4 und P5 liegen somit nicht auf der Oberfläche O. Entsprechend kann und soll der Manipulator 4 diese interpolierten Bahnpunkte I1 nicht anfahren, damit eine möglicherweise irreparable Schädigung des Manipulators 4 und/oder des Werkstücks 1 vermieden wird.

Für die Projektion der Bahnkurve K1 werden die dreidimensionalen Koordinaten der Stützpunkte P4, P5 und der interpolierten Bahnpunkte I1 in Paare von Winkelkoordinaten umgerechnet. Bei der Projektion mittels der Lichtstrahlen 115 ergibt sich eine projizierte Bahnkurve K'1 auf der Oberfläche O. Ein interpolierter Bahnpunkt I1 wird auf einen projizierten Bahnpunkt R1 abgebildet. Die projizierte Bahnkurve K'1 wird mittels Triangulation dreidimensional erfasst (S24). Die Triangulation kann z.B. durch zwei zueinander beabstandete aufgestellte Kameras 50, 51 erfolgen. Eine entsprechende Datenverarbeitungseinrichtung für die Triangulation 60 berechnet aus den stereografisch aufgenommenen Bildern den dreidimensionalen Verlauf der projizierten Bahnkurve K'1. Die entsprechenden Datenpunkte werden an die Datenverarbeitungseinrichtung 20 weitergeleitet. Diese bestimmt die Abschnitte, in welchen die projizierte Bahnkurve K'1 von der durch Interpolation festgelegten Bahnkurve K1 abweichen (S25). Der Projektor wird nun durch Steuerbefehle 120 angewiesen, diese abweichenden Abschnitte der projizierten Bahnkurve K'1 in einer anderen Farbe zu projizieren als die übrigen Abschnitte. Der Bediener erhält auf diese Weise eine sofortige Rückmeldung, dass in diesen Bereichen eine Anpassung der Interpolationsfunktionen und/oder zusätzliche Stützpunkte P4, P5,... für die Festlegung der Bahnkurve K'1 notwendig sind (S26).

Aus der Abweichung der projizierten Bahnkurve von der festgelegten interpolierten Bahnkurve K1 kann die Krümmung der Oberfläche O bestimmt werden. Die so bestimmte Krümmung kann verwendet werden, eine geeignetere Interpolationsfunktion zum Festlegen der Wegstrecken zwischen den Stützpunkten P4, P5 zu verwenden. Insbesondere kann eine Interpolationsfunktion verwendet werden, die die gleiche Krümmung aufweist. Eine Anpassung kann automatisch oder auf Nachfrage durch den Bediener erfolgen. Dies ist insbesondere dann vorteilhaft, wenn ein neues Werkstück oder eine Werkstücksserie nur geringe Modifikationen oder Abweichungen zu einem vorhergehenden Werkstück aufweist. Hierdurch wird der Aufwand für die Neuprogrammierung und/oder Einrichtung des Roboters 2 auf ein vertretbares Maß reduziert.

Anstelle von zwei Kameras 50, 51 sind auch andere Triangulationseinrichtungen verwendbar. Durch eine Zeit-aufgelöste Verfolgung der Projektion der Bahnkurve K1 kann ebenfalls eine Bestimmung der Krümmung der Oberfläche O erreicht werden. Hierbei müssen geeignete Synchronisationseinrichtungen zwischen einem zeitauflösenden Bilderfassungssystem und dem Projektor 15 bereitgestellt werden. Ferner ist ein Projektor notwendig, der den Lichtstrahl 115 mit einer gleichbleibenden Winkelgeschwindigkeit über die Oberfläche O ablenken kann.

Eine weitere Vorrichtung projiziert bei einer festgestellten Abweichung zwischen der interpolierten Bahnkurve K1 und der projizierten Bahnkurve K'1 ein Gitter. Die Gitterlinien werden unter zueinander äquidistant beabstandeten Winkeln projiziert. Trifft ein solch projiziertes Gitter auf eine planare Oberfläche, ergibt sich ein Gitter mit äquidistant beabstandeten Linien. Auf einer gekrümmten Oberfläche ist das projizierte Gitter verzerrt. Aus der Verzerrung lässt sich in eindeutigerweise die Krümmung der Oberfläche O bestimmen. Hierfür ist eine entsprechende Ansteuerungseinrichtung für den Projektor 15 zum Generieren des Gitters und eine einfache bildauflösende Einrichtung notwendig.

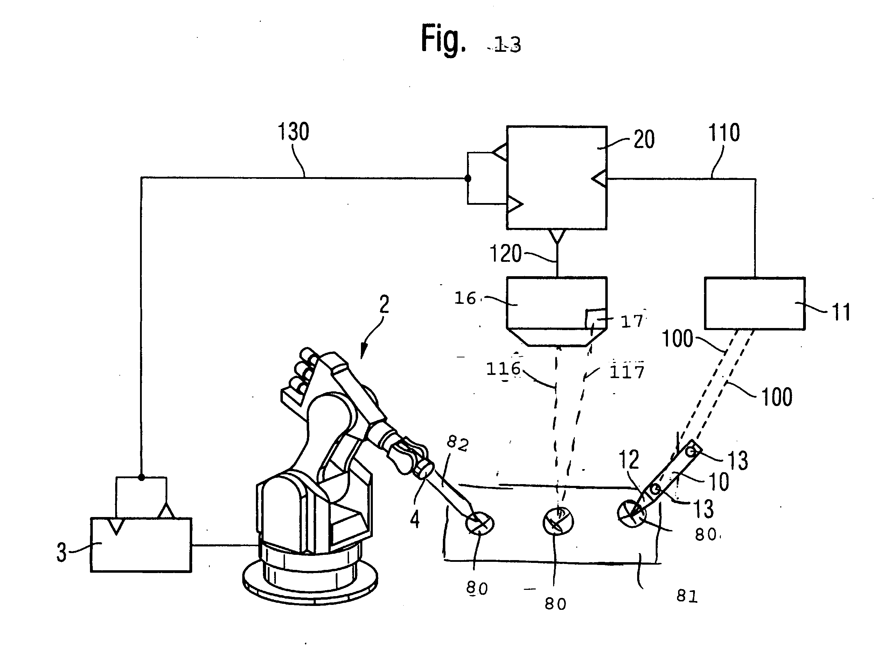

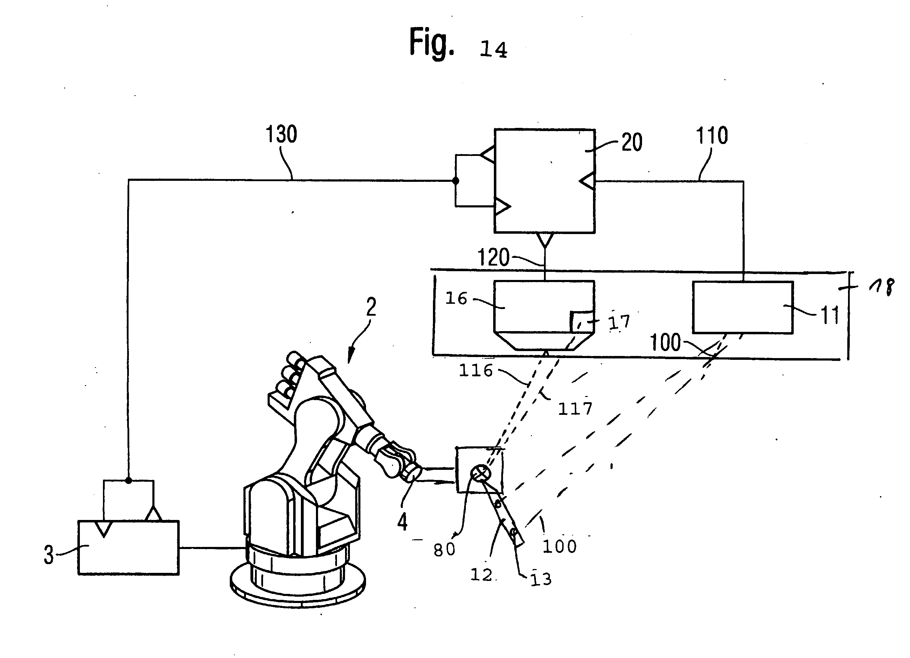

In den bisherigen Ausführungen wird angenommen, dass die Beziehung zwischen Koordinatensystemen des Roboters 2 und der Verfolgungseinrichtung 11 bzw. dem Stift 10 und der Projektionseinrichtung 15 a priori bekannt sei. Üblicherweise ist hierzu jedoch eine Kalibrierung oder Eichung auf eines der Koordinatensysteme oder auf ein globales Koordinatensystem notwendig. Insbesondere im Kontext einer mobilen Projektionseinrichtung 15, die für viele verschiedene Roboter 2 verwendet werden soll, ist eine einfache und schnelle Kalibrierung notwendig. Eine Beschreibung eines solchen Kalibrierungsverfahrens wird zusammen mit den Figuren 13 und 14 nachgetragen. Für die bisherigen Ausführungen sei angenommen, sofern nicht explizit anders ausgeführt, dass die Beziehung der Koordinatensysteme bekannt sei.

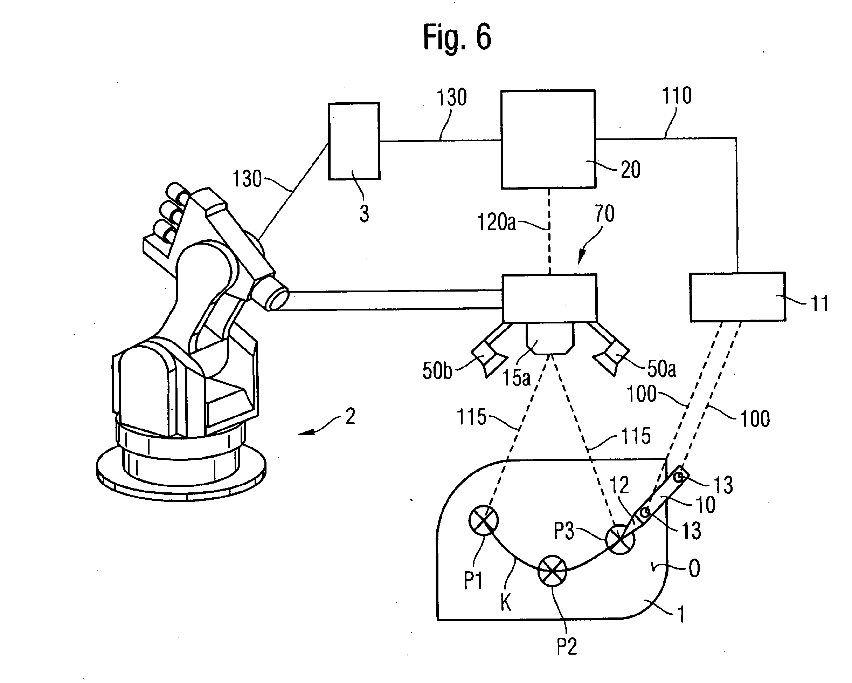

In Fig. 6 ist ein weiteres Ausführungsbeispiel schematisch dargestellt. Der Projektor 15a ist an dem Roboter 2 angebracht. Hierbei ist eine räumliche Nähe zu der Anordnung des Manipulators 4 vorteilhaft. Gegebenenfalls können sowohl der Projektor 15a als auch der Manipulator 4 gleichzeitig an dem Roboter angeordnet sein. Es kann ebenso vorteilhaft sein, den Projektor 15a lösbar an dem Roboter 2 anzuordnen, um ihn zur Einrichtung für andere Roboter ebenfalls verwenden zu können. Die Erfassung der Stützpunkte P1, P2, ... und die Festlegung der Bahnkurve K erfolgt wie zuvor beschrieben mittels des Stifts 10, der Verfolgungseinrichtung 11 und der Datenverarbeitungseinrichtung 20a. Eine Übertragung der Steuerungsdaten von der Datenverarbeitungseinrichtung 20a an den Projektor 15a kann mittels Funksignalen 120a oder über die Robotersteuerung 3a erfolgen. Vor der Projektion der Bahnkurve K wird vorzugsweise der Roboter 2 in eine Pose verfahren, in welcher ein Abstand zwischen dem Projektor 15a und der Oberfläche O möglichst gering ist, andererseits aber der Projektor die gesamte Bahnkurve K projizieren kann. Der Abstand und die Positionierung sind abhängig von der Oberflächenform und dem maximalen Winkelbereich, den der Projektor 15a ausleuchten kann.

Bei sehr verwinkelten Werkstücken oder Werkstücken mit Hohlräumen kann die Projektion durch einen einzigen Projektor 15 nur bedingt von einer festen Position aus erfolgen. Hierbei erweist es sich insbesondere als vorteilhaft, wenn der Projektor 15a an dem Roboter 2 befestigt und an verschiedene Positionen bewegbar ist. Der Projektor 15a kann in einem Modul 70 integriert sein, das auch eine optische Erfassungseinrichtung zur Triangulation, z.B. zwei Kameras 50a, 51 a aufweist. Das Modul 70 ist vorteilhafterweise als Einheit integriert. Hierdurch ergibt sich ein dauerhafter Bezug zwischen den Koordinatensystemen der Projektionseinrichtung 15a und den optischen Erfassungseinrichtungen 50a, 51a. Ferner kann das Modul mit einem Verbindungsstück versehen sein, das eine einfache Anbringung und Entfernung von dem Roboter 2 ermöglicht.

Die Erfassung der Koordinaten des Stifts erfolgt in einem Weltkoordinatensystem oder einem Koordinatensystem der Verfolgungseinrichtung 11. Die Projektion der Bahnkurve K durch den Projektor 15a erfolgt jedoch in einem Koordinatensystem, welches von der Pose des Roboters 2 abhängig ist. Die notwendigen Transformationen der Koordinaten erfolgt basierend auf dem Robotermodell der Robotersteuerung 3.

Die Verfolgungseinrichtung 11 kann in dem Modul 70 integriert sein. Hierdurch sind die Koordinatensysteme der Projektionseinrichtung 15a, der Erfassungseinrichtung 50a, 51 a und der Verfolgungseinrichtung 11 zueinander in fester Beziehung. Zweckmäßiger Weise wird eine einmalige Kalibration durchgeführt und die Koordinatensysteme auf ein einziges Koordinatensystem abgebildet.

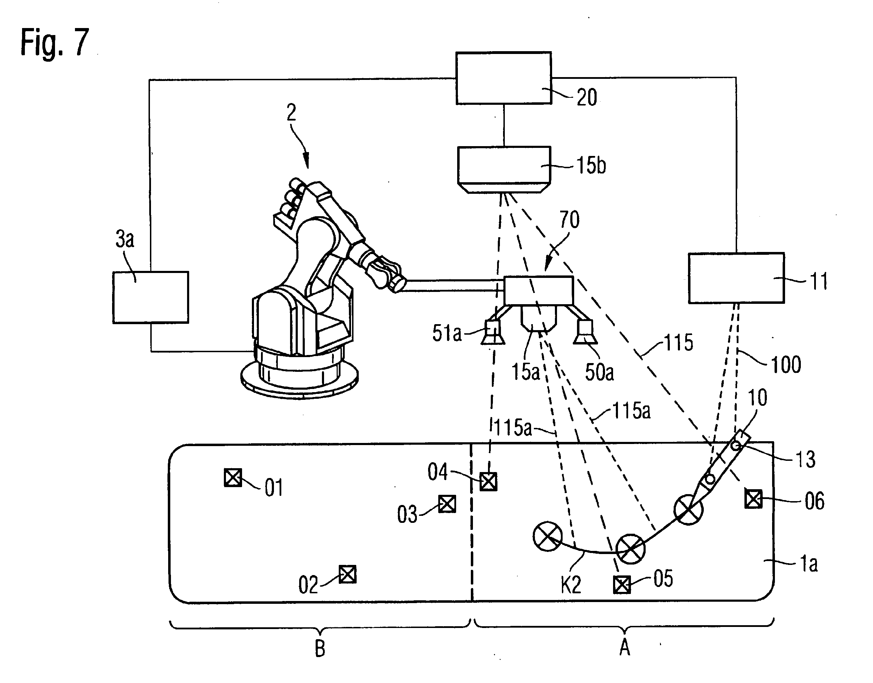

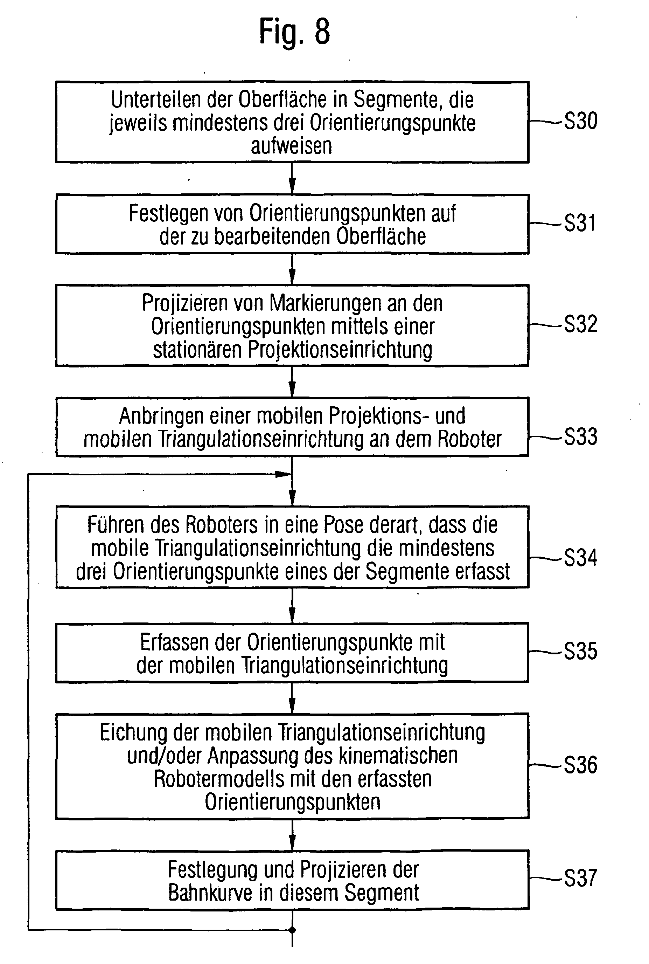

Zusammen mit den Fig. 7 und 8 wird ein weiteres Ausführungsbeispiel erläutert. Dem Bediener ist wie zuvor ein Stift 10 bereitgestellt, dessen Position durch die Verfolgungseinrichtung 11 erfasst wird. Bei einem sehr großen oder komplex geformten Werkstück 1a ist es zweckmäßig, die Oberfläche O in mehrere Segmente A, B zu unterteilen (S30). In jedem dieser Segmente markiert der Bediener mittels des Stifts mehrere Orientierungspunkte O1, O2,... (S31). Deren Koordinaten werden über eine Datenverarbeitungseinrichtung 20 an eine stationäre Projektionseinrichtung 15b weitergeleitet. Diese Projektionseinrichtung projiziert nun Markierungen auf die Oberfläche O entsprechend den Orientierungspunkten O1, O2, ... (S32). Die Projektionseinrichtung muss in größerem Abstand zu der Oberfläche O angeordnet sein, um alle Orientierungspunkte O1, O2, ... projizieren zu können. Daher ist ein Projektor 15b mit einer hohen Winkelgenauigkeit für zulässige Abweichungen der projizierten Markierungen von maximal 1 mm erforderlich.

Eine mobile Projektions- und Triangulationseinrichtung 70 wird von dem Roboter 2 über einem Segment A positioniert (S34). Hierbei wird der Abstand zwischen der Projektionseinrichtung 15a und der Oberfläche O unter der nachfolgenden Bedingung minimiert. Der Projektor 15a muss einen Bahnpunkt in jedem Bereich des Segments A projizieren können und die Triangulationseinrichtung 50a, 51a muss mindestens drei der Orientierungspunkte O1, O2 erfassen. Die Triangulationseinrichtung 50a, 51 a bestimmt in dem Roboterkoordinatensystem die Koordinaten der Orientierungspunkte O1, O2. Anhand des kinematischen Robotermodells der Robotersteuerung 3 werden die Koordinaten des erfassten Orientierungspunkts O1 von dem Robotermodell in die Weltkoordinaten übertragen oder vice versa. Zwischen den durch die Triangulationseinrichtung 50a, 51 a erfassten und in das Weltkoordinatensystem übertragenen Koordinaten der Orientierungspunkte O1, 02 und den durch den Stift 10 in den Weltkoordinatensystem festgelegten Koordinaten wird die Differenz bestimmt. Übersteigt die Differenz einen vorgegebenen Schwellwert, wird eine Eichung der mobilen Triangulationseinrichtung und/oder eine Anpassung des kinematischen Robotermodells durchgeführt (S36).

Nachfolgend legt der Bediener mittels des Stifts 10 eine gewünschte Anzahl an Stützpunkten P7, P8, ... fest. Der Projektor 15a projiziert wie in den anderen Ausführungsbeispielen eine Bahnkurve K2 auf die Oberfläche O in dem Segment A. Nachdem die Bahnkurve in dem Segment A den gewünschten Vorgaben des Bedieners entspricht, wird der Roboter 2 in die nächste Pose verfahren und die Schritte S34 bis S37 für das Segment B in gleicher oder ähnlicher Weise wiederholt. Vorzugsweise weisen die Segmente A, B einen Überlappungsbereich auf.

Eine Eichung des optischen Erfassungssystems und/oder eine Anpassung des Robotermodells kann auch mithilfe von selbstleuchtenden oder reflektierenden Orientierungsmarkern erfolgen. Diese können gleich den Orientierungspunkten an ausgewählten Punkten der Oberfläche angeordnet werden. Mit einer geeigneten kalibrierten Vermessungseinrichtung werden zunächst die Koordinaten der Orientierungsmarker bestimmt. Die optische Erfassungseinrichtung erfasst dann die Koordinaten der Orientierungsmarker. Ergibt sich eine Abweichung zwischen den bestimmten und den erfassten Koordinaten kann das Robotermodell angepasst werden.

Für reflektierende Orientierungsmarker kann vorteilhafterweise von der Projektionseinrichtung 15a oder einer zusätzlichen Einrichtung ein Lichtstrahl in eine fest eingestellte Richtung emittiert werden. Antiparallel rückreflektierte Strahlen werden erfasst und aus deren Auftreffpunkt auf einem speziellen ortsauflösenden Sensor oder der optischen Erfassungseinrichtung unmittelbar die Koordinaten des Moduls 70 bestimmt.

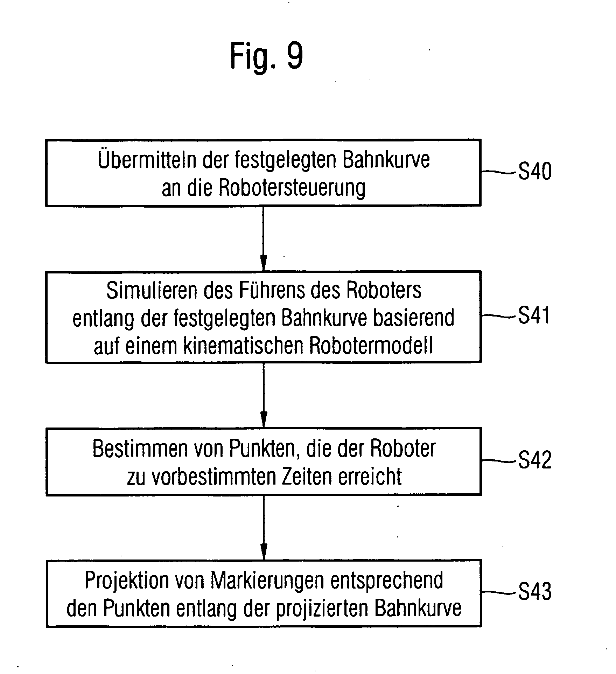

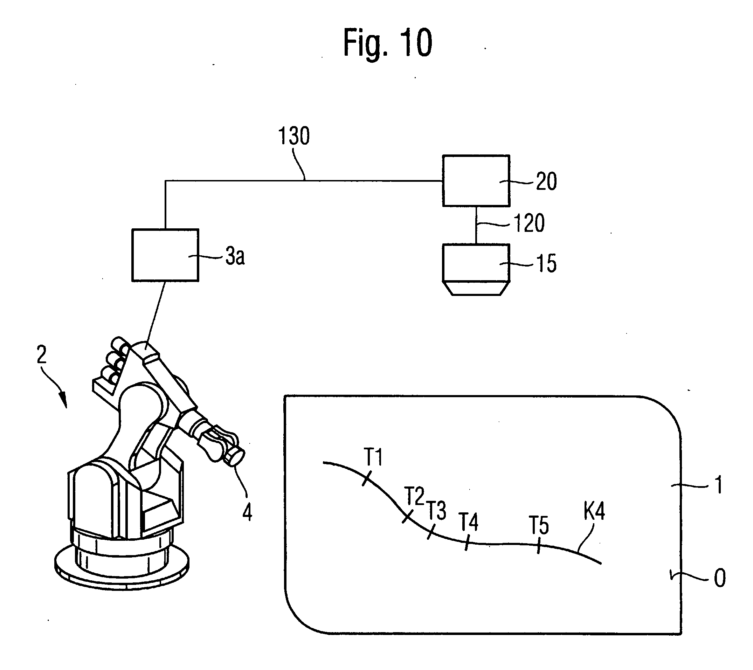

In Fig. 9 ist ein Flussdiagramm eines Verfahrens dargestellt, das ergänzend zu den zuvor beschriebenen Ausführungsbeispielen ausgeführt werden kann. Nachdem eine Bahnkurve K durch den Bediener festgelegt ist, wird diese an die Robotersteuerung 3 übermittelt (S40). Die Bahnkurve wird in geeignete Steuerdaten für ein in der Robotersteuerung 3 enthaltenes kinematisches Robotermodell übertragen. Nachfolgend wird die Bewegung des Roboters basierend auf dem kinematischen Robotermodell simuliert (S41). Gegebenenfalls kann hierbei auch der Roboter real verfahren werden, vorzugsweise allerdings mit einem inaktiven Manipulator 4. Während der Simulation wird bestimmt, welche Bahnpunkte der Roboter zu vorbestimmten Zeiten erreicht (S42). Diese so bestimmten Bahnpunkte werden nachfolgend als Streckenpunkte bezeichnet. Vorzugsweise sind die vorbestimmten Zeitpunkte äquidistant verteilt. Dann sind die Abstände der Streckenpunkte zueinander ein Maß für die Geschwindigkeit, mit welcher der Roboter den Manipulator 4 entlang der Bahnkurve K bewegt. Die Koordinaten der Streckenpunkte werden an den Projektor 15, 15a übermittelt. Dieser projiziert entsprechend den Streckenpunkten Markierungen entlang der Bahnkurve (S43). Somit erkennt der Bediener in intuitiver Weise, in welchen Bereichen der Manipulator 4 aufgrund der Kinematik des Roboters sich schneller oder langsamer entlang der Bahnkurve K bewegen wird. Dies ist z.B. beim Aufbringen eines Klebers von Bedeutung. In dem Bereich mit geringerer Geschwindigkeit muss entsprechend eine geringere Menge Kleber pro Zeiteinheit durch den Manipulator ausgegeben werden, damit der Kleber gleichmäßig aufgetragen wird. In Fig. 10 ist grafisch die Bahnkurve K4 mit mehreren Markierungen T1, T2, ... entsprechend der Streckenpunkte dargestellt.

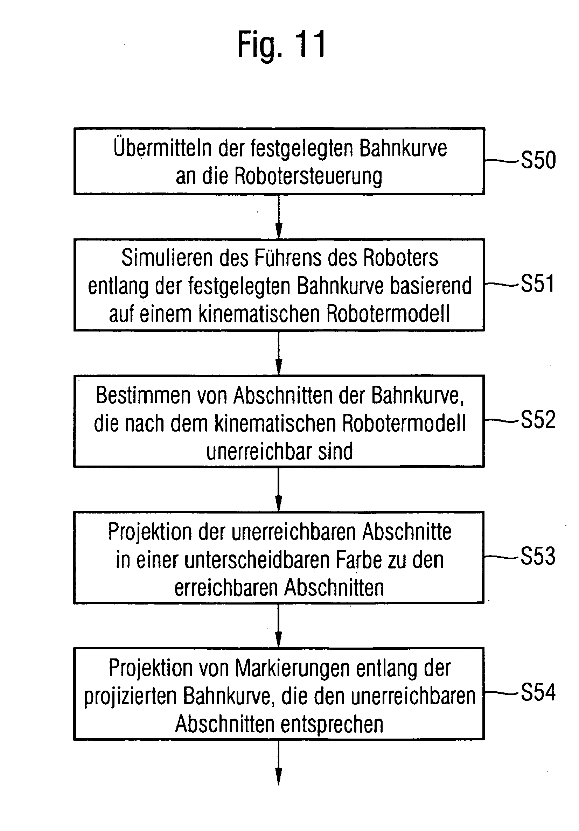

Weitere zusätzliche Verfahrensschritte werden zusammen mit dem Flussdiagramm in Fig. 11 erläutert. Nach einem Übermitteln einer festgelegten Bahnkurve an die Robotersteuerung (S50) wird die Führung des Manipulators 4 durch den Roboter 2 entlang der Bahnkurve K basierend auf dem kinematischen Robotermodell der Robotersteuerung 3 simuliert (S51). Anhand des kinematischen Robotermodells werden unerreichbare Abschnitte der Bahnkurve K bestimmt (S52). Die Unerreichbarkeit der einzelnen Abschnitte kann durch den Roboter 2 und dessen mechanischen Aufbau bedingt sein. Ferner sind die Räumlichkeiten zu berücksichtigen, in welchen der Roboter tätig ist. Zudem müssen Stöße mit dem Werkstück vermieden werden. Hierfür werden dreidimensionale Modelle des Arbeitsraums bzw. des Werkstücks bereitgehalten. Während der Projektion der Bahnkurve K werden die unerreichbaren Abschnitte in einer anderen Farbe projiziert als die übrigen Abschnitte (S53). Hierdurch erkennt der Bediener sofort, welche Bereiche erreichbar bzw. unerreichbar sind. In einer Alternative oder zusätzlich können Markierungen entlang den unerreichbaren Abschnitten projiziert werden (S54).

Die bisher beschriebenen Ausführungsbeispiele und Ergänzungen haben sich auf die Erfassung der Koordinaten des Stiftes bzw. der Koordinaten der Stützpunkte P1, P2, ... beschränkt. Für manche Manipulatoren 4, z.B. Klebepistolen, ist nicht nur der Verlauf der Bahnkurve K für die ordnungsgemäße Bearbeitung des Werkstücks 1 von Bedeutung, sondern auch die Orientierung des Manipulators 4 zu dem Verlauf der Bahnkurve K. In diesem Fall werden nicht nur die dreidimensionalen Koordinaten des Stifts 10 erfasst, sondern auch dessen Orientierung im Raum. Diese bis zu sechs dimensionalen Daten werden an die Datenverarbeitungseinrichtung weitergeleitet. Hierin wird neben der Interpolation zum Bestimmen einer Bahnkurve K zwischen den Stützpunkten P1, P2, ... auch eine Interpolation zwischen den verschiedenen Orientierungen des Manipulators zwischen den Stützpunkten P1, P2, ... durchgeführt. Der Projektor 15, 15a projiziert wie zuvor beschrieben die Bahnkurve K auf die Oberfläche O des Werkstücks 1. Zudem wird in vorbestimmten vorzugsweise regelmäßigen Abständen ein Symbol entlang der Bahnkurve K projiziert, das die Orientierung des Manipulators andeutet.

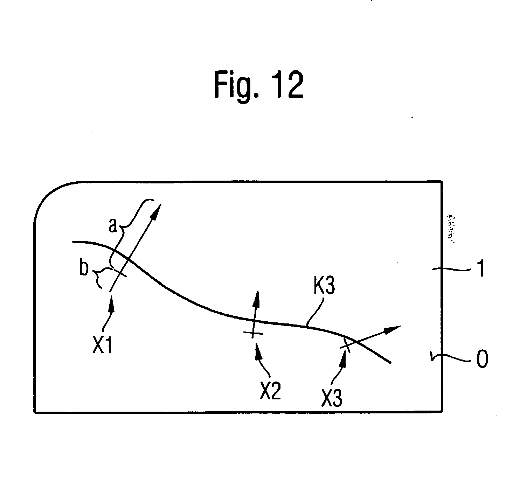

In Fig. 12 sind beispielhaft solche Symbole X1, X2, ... dargestellt. Das Symbol weist eine Linie mit einer Pfeilspitze auf. Die Ausrichtung dieser Linie gibt die Orientierung des Manipulators in einer Ebene parallel zu der Oberfläche O an. Die Linie wird durch eine Markierung in zwei Abschnitte a und b unterteilt. In dem Längenverhältnis der beiden Abschnitte a, b ist die Orientierung des Manipulators senkrecht zur Oberfläche kodiert. So weist zum Beispiel der Manipulator nach unten, wenn der Abschnitt a nahe der Pfeilspitze länger als der Abschnitt b ist.

Eine zweite Variante sieht zwei senkrecht zueinander angeordnete Pfeile vor, die die z.B. die x-Koordinate und die y-Koordinate repräsentieren. Deren absoluten Längen geben die Orientierung des Manipulators in der x-y-Ebene an. Deren relatives Längenverhältnis kodiert die z-Richtung des Manipulators.

Die Bahnkurve und die Kurve der Orientierungen werden zusammen an die Robotersteuerung 3 übermittelt und eine entsprechende Verarbeitungseinrichtung transformiert die Bahnkurven und/oder Orientierungskurven in ein Ansteuerungsprogramm für den Roboter 2.

Figur 13 illustriert eine Möglichkeit die unterschiedlichen Koordinatensysteme des Roboters 2, der Projektionseinrichtung 16 und der Verfolgungseinrichtung 11 bzw. des Stifts 12 in eine fest definierte Beziehung zu setzen, d.h. die einzelnen Koordinatensysteme auf ein Koordinatensystem zu kalibrieren.

Auf einem Kalibrierungsobjekt 81 ist eine Vielzahl von Kalibrierungspunkte 80 angeordnet. Die Abstände und Lagen der einzelnen Kalibrierungspunkte zueinander sind genau bekannt. Die Kalibrierungspunkte 80 sind zweckmäßigerweise in verschiedenen Ausprägungen vorgesehen. Ein erster Typ von Kalibrierungspunkten 80 ist taktil erfassbar, z.B. in Form von Rillen oder Kerben, ein zweiter Typ ist optisch erfassbar, z.B. in Form reflektierenden Körpern, Katzenaugen, Retroreflektoren, ein dritter Typ kann in Form von bekannten Muster bereitgestellt werden, z.B. aufgeklebte Ecken, Streifen oder aufprojizierte Muster. Weitere Typen sind denkbar, z.B. lokal angeordnete Drucksensoren.

Der Roboter 2 wird an die von ihm erfassbaren Kalibrierungspunkte 80 gefahren und die zugehörigen Koordinaten der Kalibrierungspunkte 80 in dem Roboter eigenen Koordinatensystem bestimmt. Der Stift 12 wird an für diesen geeignete Kalibrierungspunkte 80 gehalten und die Koordinaten des Stifts 12 in seinem Koordinatensystem bestimmt.

Gleiches erfolgt durch die Projektionseinrichtung 16. Die Projektionseinrichtung sendet vorzugsweise einen Lichtstrahl 116 entsprechend einem Lichtpunkt aus. Fällt dieser Lichtstrahl 116 auf einen Retroreflektor wird der reflektierte Lichtstrahl 117 auf einen Sensor 17 in der Projektionseinrichtung 16 gelenkt. Die Projektionseinrichtung 16 kann somit erkennen, dass in der Richtung, in welche der Lichtstrahl 116 emittiert wurde, ein Kalibrierungspunkt 80 liegt. Die Richtung wird entsprechend in dem Koordinatensystem der Projektionseinrichtung 16 aufgezeichnet. Der Sensor 17 kann unter Anderem aus einer Mehrzahl von Lichtsensoren bestehen, die ringförmig um den Auslass des Lichtstrahls angeordnet sind. Der Lichtstrahl 117 kann einen Lichtpunkt oder ein Muster darstellen.

Ein Vergleich der einzelnen Koordinatenwerte und die Kenntnis der relativen Lage der Kalibrierungspunkte ermöglicht die Koordinatensysteme aufeinander abzugleichen.

Das vorangegangen beschriebenen Verfahren erfordert einen gewissen Zeitbedarf. Insbesondere erweist sich die Erfassung der einzelnen Kalibrierungspunkte 80 durch den Roboter als zeitintensiv.

In Figur 14 ist ein weiterer Aufbau für ein Verfahren illustriert, das angewendet werden kann, wenn die Projektionseinrichtung 16 und die Verfolgungseinrichtung 17 in einem Gehäuse 18 angeordnet sind. In anderen Worten die Beziehung der Koordinatensysteme der Projektionseinrichtung 16 und der Verfolgungseinrichtung 18 sind bekannt, z.B. durch eine Kalibrierung gemäß dem zuvor beschriebenen Verfahren.

An dem Roboter 2 wird vorzugsweise im Bereich des Werkzeugs oder dem Flansch 4 für ein Werkzeug ein Kalibrierungspunkt 80 angeordnet. Dieser Kalibrierungspunkt 80 ist vorzugsweise durch den Stift 12 erfassbar, kann aber auch durch die Projektionseinrichtung 16 in Kombination mit dem Sensor 17 erfassbar sein. Das Verfahren sieht vor, den Roboter mindestens drei Posen einnehmen zulassen. In diesen drei Posen werden die Koordinaten des Markierungspunktes 80 durch den Stift 12 in dem Koordinatensystem des Stifts 12 erfasst. Die Koordinaten der Posen in dem Roboter-eigenen Koordinatensystem können somit abgeglichen werden.

Eine Kamera kann durch Projektion von Mustern, z.B. durch das Projektionssystem 16 auf ein Kalibrierungsobjekt, z.B. plane Ebene, kalibriert werden. Die Muster können Kreise oder Streifenmuster beinhalten. Die Verzerrungen der Muster durch die Perspektive der Kamera ermöglichen einer Datenverarbeitungseinrichtung die Koordinaten des Musters in dem Koordinatensystem der Kamera zu bestimmen. Hierdurch wird ein Abgleich der Kamera mit dem Projektionssystem möglich.

Obwohl die vorliegende Erfindung anhand bevorzugter Ausführungsbeispiele beschrieben wurde, ist sie nicht darauf beschränkt.

Insbesondere sind eine Vielzahl verschiedener Projektoren verwendbar. Diese können Laser mit mechanisch bewegten Ablenkeinrichtungen und/oder optomechanischen Ablenkeinrichtungen beinhalten. Andererseits sind auch Projektionseinrichtungen verwendbar, die z.B. mittels gesteuerter und lokal begrenzter Abschattung durch Flüssigkristallanzeigen und/oder beleuchtete Kippspiegel-Anordnungen (Digital Light Processing Arrays) Muster auf die Oberfläche projizieren können.

Der Zeiger ist als taktil berührender Stift in den Ausführungsbeispielen beschrieben. Jedoch kann dieser auch durch einen Lichtstrahl gebildet werden. Die Koordinaten von dem angestrahlten Punkt auf der Oberfläche werden durch eine geeichte optische Erfassungseinrichtung bestimmt. Das Grundprinzip entspricht somit der Erfassung der Koordinaten der Spitze des Stifts.

Die Anordnung der Datenverarbeitungseinrichtung kann getrennt oder integriert in einer der anderen Einrichtungen erfolgen.

### Bezugszeichenliste

| | |
|---|---|
| 1 | Werkstück |
| 2 | Roboter |
| 3, 3a | Roboter-Steuerung |
| 4 | Manipulator |
| 10 | Stift |
| 11 | Verfolgungseinrichtung |
| 12 | Spitze |
| 13 | Sender |
| 15, 15a | Projektor |
| 20, 20a | Datenverarbeitungseinrichtung |
| 50, 51, 50a, 51a | optische Erfassungseinrichtung |
| 70 | mobile Projektions- und Erfassungseinrichtung |
| 100 | Signalpuls |
| 110 | Positionssignal |
| 115 | Lichtstrahl |
| 120 | Ansteuerungssignal |
| 130 | Bahnkurven-Signal |
| O | Oberfläche |
| K, K1, ... | Bahnkurven |
| K'1, ... | abweichende Abschnitte von Bahnkurven |
| P1, P2, ... | Stütz-Punkte |
| O1, O2, ... | Orientierungs-Punkte |
| T1,T2,... | Zeitmarkierungen |

## Patentansprüche

1. Verfahren zum Einrichten einer Bahnkurve einer Robotervorrichtung mit folgenden Schritten:
(a) Anordnen eines Werkstücks (1) mit wenigstens einer zu bearbeitenden Oberfläche (O) im Arbeitsbereich der Robotervorrichtung (2),
(b) Positionieren einer Zeigereinrichtung (10) an einer Mehrzahl von Stütz-Punkten (P1, P2, ...) auf der zu bearbeitenden Oberfläche (O) und Festlegen der Koordinaten der Stütz-Punkte (P1, P2, ...) durch Erfassen der zugehörigen Koordinaten der Zeigereinrichtung (10) mittels einer Verfolgungseinrichtung (11), und
(c) automatisches Interpolieren von Wegstrecken zwischen jeweils zwei benachbarten Stütz-Punkten (P1, P2, ...) gemäß einem vorbestimmten Algorithmus zum Festlegen der Bahnkurve (K, K1, ...),
**gekennzeichnet durch** die Schritte:
(d) Projizieren der Bahnkurve (K, K1, ...) auf die zu bearbeitende Oberfläche (O) mittels einer Projektionseinrichtung (15; 15a; 16),
(e) optisches Erfassen der projizierten Bahnkurve (K, K1, ...),
(f) Bestimmen von abweichenden Abschnitten (K'1), in denen die projizierte Bahnkurve (K, K1, ...) von der festgelegten Bahnkurve (K, K1, ...) abweicht,
(g) Bestimmen einer Krümmung der Oberfläche (O) basierend auf den abweichenden Abschnitten (K'1), und
(h) Anpassen des automatischen Interpolierens in Abhängigkeit der Krümmung.

2. Verfahren nach Anspruch 1, wobei vor dem Positionieren der Zeigereinrichtung (10) folgende Verfahrensschritte durchgeführt werden:
Anordnen eines Kalibrierpunkts (80) an der Robotervorrichtung (2),
Verfahren des Kalibrierpunkts (80) durch die Robotervorrichtung (2) in mindestens drei Posen,
jeweils Positionieren der Zeigereinrichtung (10) an dem Kalibrierpunkt (80),
Erfassen der Koordinaten der Zeigereinrichtung (10) zugehörig zu der jeweiligen Pose, und
Abgleich des Koordinatensystems der Robotervorrichtung (2) und des Koordinatensystems der Zeigereinrichtung (10) basierend auf den angefahrenen Posen und den jeweilig zugehörig erfassten Koordinaten.

3. Verfahren nach Anspruch 1, wobei vor dem Positionieren der Zeigereinrichtung (10) folgende Verfahrensschritte durchgeführt werden:
Anordnen eines Kalibrierpunkts (80) an der Robotervorrichtung (2),
Verfahren des Kalibrierpunkts (80) durch die Robotervorrichtung (2) in mindestens drei Posen,
jeweils Projizieren eines Musters durch die Projektionseinrichtung (16) in geschätzte Richtungen zu dem Kalibrierpunkt (80),
Erfassen des Musters durch eine Erfassungseinrichtung (17), und
Ermitteln einer Richtung von der Projektionseinrichtung (16) zu dem Kalibrierpunkt (80) bei der jeweiligen Pose basierend auf dem erfassten Muster; und
Abgleich des Koordinatensystems der Robotervorrichtung (2) und des Koordinatensystems der Projektionseinrichtung (16) basierend auf den angefahrenen Posen und den jeweilig erfassten Richtungen.

4. Verfahren nach Anspruch 3, wobei der Abgleich des Koordinatensystems der Zeigereinrichtung (10) und des Koordinatensystems der Projektionseinrichtung (16) basierend auf einem Kalibrierobjekt, das eine Mehrzahl von Kalibrierpunkten (80) aufweist, erfolgt.

5. Verfahren nach einem der vorhergehenden Ansprüche mit den weiteren Schritten:
Simulieren eines Führens der Robotervorrichtung (2) entlang der festgelegten Bahnkurve (K, K1, ...) basierend auf einem kinematischen Modell der Robotervorrichtung (2),
Bestimmen von ersten Punkten der Bahnkurve (K, K1, ...), die die Robotervorrichtung (2) beim simulierten Führen zu vorbestimmten Zeitpunkten erreicht, und
Projizieren von Zeit-Markierungen (T1, T2, ...) entlang der Bahnkurve (K, K1, ...) an den Koordinaten der ersten Punkte.

6. Verfahren nach einem der vorhergehenden Ansprüche mit den weiteren Schritten:
Simulieren eines Führens der Robotervorrichtung (2) entlang der festgelegten Bahnkurve (K, K1, ...) basierend auf einem kinematischen Modell der Robotervorrichtung (2),
Bestimmen von zweiten Punkten der Bahnkurve (K, K1, ...), für die die Robotervorrichtung (2) Posen einnimmt, welche zur Kollision mit dem Werkstück (1) und/oder einer Arbeitsumgebung führen und/oder für welche das Simulieren ergibt, dass die Posen für die Robotervorrichtung (2) uneinnehmbar sind, und
Projizieren von Kollisions-Markierungen entlang der projizierten Bahnkurve (K, K1, ...) an den Koordinaten der zweiten Punkte.

7. Verfahren nach Anspruch 6, wobei als Projektionseinrichtung (15; 15a; 16) eine mobile Projektionseinrichtung (15a) nahe oder anstelle eines Manipulators an der Robotervorrichtung (2) fest oder lösbar angeordnet wird, die zu bearbeitende Oberfläche (O) in mehrere Segmente (A, B) aufgeteilt wird und für jedes Segment (A, B) die mobile Projektionseinrichtung (15a) durch die Robotervorrichtung (2) automatisch in eine Pose geführt wird, von welcher aus die mobile Projektionseinrichtung (15a) auf jeden Punkt des ausgewählten Segments (A, B) projizieren kann, bevor durch die Zeigereinrichtung (10) und deren Erfassung eine Mehrzahl von Stütz-Punkten (P1, P2, ...) in dem Segment (A, B) der Oberfläche (O) festgelegt wird.

8. Verfahren nach Anspruch 7, wobei eine Mehrzahl von Orientierungspunkten (O1, O2, ...) festgelegt und mittels einer stationären Projektionseinrichtung (15b) auf die zu bearbeitende Oberfläche (O) projiziert wird und die mobile Projektionseinrichtung (15a) zusammen mit einer optischen Erfassungseinrichtung (50, 51; 50a, 51a) mittels der Robotervorrichtung (2) automatisch in eine Pose geführt wird, von welcher aus die optische Erfassungseinrichtung (50a, 50b) mindestens drei Orientierungspunkte (O1, O2, ...) erfasst.

9. Verfahren nach Anspruch 8, wobei eine Kalibrierung der optischen Erfassungseinrichtung (50, 51; 50a, 51a) und/oder der Projektionseinrichtung (15; 15a; 16) und/oder des Robotermodells basierend auf einem Unterschied zwischen den festgelegten Koordinaten der Orientierungspunkte (O1, O2, ...) und den erfassten Koordinaten der projizierten Orientierungspunkte (O1, O2, ...) erfolgt.

10. Verfahren nach Anspruch 9, wobei eine Mehrzahl von reflektierenden oder selbstleuchtenden Orientierungsmarkern auf der zu bearbeitenden Oberfläche (O) an bekannten Koordinaten angeordnet werden, die optische Erfassungseinrichtung (50, 51; 50a, 51a) die Koordinaten der Orientierungsmarker erfasst und eine Kalibrierung der optischen Erfassungseinrichtung (50, 51; 50a, 51a) und/oder der Projektionseinrichtung (15; 15a; 16)) und/oder des Robotermodells basierend auf einem Unterschied zwischen den bekannten Koordinaten der Orientierungsmarker und den erfassten Koordinaten der Orientierungsmarker erfolgt.

11. Verfahren nach Anspruch 10, wobei richtungsangebende Markierungen (X1, X2, ...) entsprechend dem Orientierungsverlauf entlang der Bahnkurve (K, K1, ...) auf die Oberfläche (O) projiziert werden.

12. Vorrichtung zum Durchführen des Verfahrens nach einem der Ansprüche 1 bis 11, aufweisend:
eine Zeigereinrichtung (10),
eine Verfolgungseinrichtung (11) zum Erfassen der Koordinaten der Zeigereinrichtung (10) zum Festlegen der Stützpunkte (P1, P2, ...),
eine Datenverarbeitungseinrichtung (20) zum automatischen Interpolieren von Wegstrecken zwischen jeweils zwei benachbarten Stütz-Punkten (P1, P2, ...) zum Festlegen der Bahnkurve (K, K1, ...),
**gekennzeichnet durch**:
eine Projektionseinrichtung (15; 15a; 16) zum Projizieren der Bahnkurve (K, K1, ...) auf die Oberfläche (O), und
eine optische Erfassungseinrichtung (50, 51; 50a, 51a) zum Erfassen der projizierten Bahnkurve (K, K1, ...),
wobei die Datenverarbeitungseinrichtung (20) zum Bestimmen von abweichenden Abschnitten (K'1) der projizierten Bahnkurve (K, K1, ...), in denen die projizierte Bahnkurve (K, K1, ...) von der festgelegten Bahnkurve (K, K1, ...) abweicht, zum Bestimmen einer Krümmung der Oberfläche (O) basierend auf den abweichenden Abschnitten (K'1) und zum Anpassen des automatischen Interpolierens in Abhängigkeit der Krümmung ausgebildet ist.

13. Vorrichtung nach Anspruch 12, wobei die Projektionseinrichtung (15; 15a; 16) mindestens eine Laserlichtquelle und eine Ablenkeinrichtung zum Richten mindestens eines Laserlichtstrahls aufweist.

14. Vorrichtung nach einem der Ansprüche 12 oder 13, wobei die Projektionseinrichtung (15; 15a; 16) und/oder die optische Erfassungseinrichtung (50, 51; 50a, 51a) stationär bezogen auf einen Arbeitsraum des Roboters (2) angeordnet sind.

15. Vorrichtung nach einem der Ansprüche 12 bis 14, wobei die Zeigereinrichtung (10) durch einen taktil berührenden Stift oder durch einen Lichtstrahl gebildet ist.

## Claims

1. Method for establishing a trajectory of a robot apparatus, comprising the following steps:
(a) arranging a workpiece (1) with at least one surface (0) to be processed in the work region of the robot apparatus (2),
(b) positioning a pointer device (10) at a plurality of reference points (P1, P2, ...) on the surface (0) to be processed and fixing the coordinates of the reference points (P1, P2, ...) by detecting the associated coordinates of the pointer device (10) by means of a tracking device (11), and
(c) automatically interpolating paths between in each case two neighbouring reference points (P1, P2, ...) according to a predetermined algorithm for fixing the trajectory (K, K1, ...),
**characterized by** the following steps:
(d) projecting the trajectory (K, K1, ...) onto the surface (0) to be processed by means of a projection device (15; 15a; 16),
(e) optically detecting the projected trajectory (K, K1, ...),
(f) determining deviating sections (K'1), in which the projected trajectory (K, K1, ...) deviates from the fixed trajectory (K, K1, ...),
(g) determining a curvature of the surface (0) based on the deviating sections (K'1), and
(h) matching the automatic interpolation as a function of the curvature.

2. Method according to Claim 1, wherein the following method steps are carried out before the pointer device (10) is positioned:
arranging a calibration point (80) at the robot apparatus (2),
moving the calibration point (80) by way of the robot apparatus (2) in at least three poses,
in each case positioning the pointer device (10) at the calibration point (80),
detecting the coordinates of the pointer device (10) associated with the respective pose, and adjusting the coordinate system of the robot apparatus (2) and the coordinate system of the pointer device (10) based on the assumed poses and the respectively associated detected coordinates.

3. Method according to Claim 1, wherein the following method steps are carried out before the pointer device (10) is positioned:
arranging a calibration point (80) at the robot apparatus (2),
moving the calibration point (80) by way of the robot apparatus (2) in at least three poses,
in each case projecting a pattern by way of the projection device (16) in estimated directions to the calibration point (80),
detecting the pattern by way of a detection device (17), and
detecting a direction from the projection device (16) to the calibration point (80) in the case of the respective pose based on the detected pattern; and
adjusting the coordinate system of the robot apparatus (2) and the coordinate system of the projection device (16) based on the assumed poses and the respectively detected directions.

4. Method according to Claim 3, wherein the adjustment of the coordinate system of the pointer device (10) and of the coordinate system of the projection device (16) is carried out on the basis of a calibration object having a plurality of calibration points (80).

5. Method according to one of the preceding claims with the further steps:
simulating a guidance of the robot apparatus (2) along the fixed trajectory (K, K1, ...) on the basis of a kinematic model of the robot apparatus (2),
determining first points of the trajectory (K, K1, ...), which the robot apparatus (2) achieves during simulated guidance at predetermined times, and
projecting time markers (T1, T2, ...) along the trajectory (K, K1, ...) at the coordinates of the first points.

6. Method according to one of the preceding claims with the further steps:
simulating a guidance of the robot apparatus (2) along the fixed trajectory (K, K1, ...) on the basis of a kinematic model of the robot apparatus (2),
determining second points of the trajectory (K, K1, ...), for which the robot apparatus (2) assumes poses which lead to a collision with the workpiece (1) and/or a work environment and/or for which the simulation shows that the poses cannot be assumed by the robot apparatus (2), and
projecting collision markers along the projected trajectory (K, K1, ...) at the coordinates of the second points.

7. Method according to Claim 6, wherein, as a projection device (15; 15a; 16), a mobile projection device (15a) is arranged fixedly or removably near a manipulator on the robot apparatus (2) or instead of it, the surface (0) to be processed is divided into a plurality of segments (A, B) and, for each segment (A, B), the mobile projection device (15a) is automatically guided by the robot apparatus (2) into a pose from which the mobile projection device (15a) can project onto each point of the selected segment (A, B) before a plurality of reference points (P1, P2, ...) are fixed in the segment (A, B) of the surface (0) by way of the pointer device (10) and the detection thereof.

8. Method according to Claim 7, wherein a plurality of orientation points (01, 02, ...) are fixed and projected onto the surface (0) to be processed by means of a stationary projection device (15b) and the mobile projection device (15a) together with an optical detection device (50, 51; 50a, 51a) is automatically guided by means of the robot apparatus (2) into a pose from which the optical detection device (50a, 50b) detects at least three orientation points (01, 02, ...).

9. Method according to Claim 8, wherein the optical detection device (50, 51; 50a, 51a) and/or the projection device (15; 15a; 16) and/or the robot model is/are calibrated on the basis of a difference between the fixed coordinates of the orientation points (01, 02, ...) and the detected coordinates of the projected orientation points (01, 02, ...).

10. Method according to Claim 9, wherein a plurality of reflective or luminescent orientation markers are arranged at known coordinates on the surface (0) to be processed, the optical detection device (50, 51; 50a, 51a) detects the coordinates of the orientation markers and the optical detection device (50, 51; 50a, 51a) and/or the projection device (15; 15a; 16) and/or the robot model is/are calibrated on the basis of a difference between the known coordinates of the orientation markers and the detected coordinates of the orientation markers.

11. Method according to Claim 10, wherein direction-indicating marks (X1, X2, ...) are projected onto the surface (0) according to the orientation profile along the trajectory (K, K1, ...).

12. Apparatus for carrying out the method according to one of Claims 1 to 11, having:
a pointer device (10),
a tracking device (11) for detecting the coordinates of the pointer device (10) for fixing the reference points (P1, P2, ...),
a data processing device (20) for automatically interpolating paths between in each case two neighbouring reference points (P1, P2, ...) for fixing the trajectory (K, K1, ...),
**characterized by**:
a projection device (15; 15a; 16) for projecting the trajectory (K, K1, ...) onto the surface (O), and
an optical detection device (50, 51; 50a, 51a) for detecting the projected trajectory (K, K1, ...), wherein the data processing device (20) is configured for determining deviating sections (K'1) of the projected trajectory (K, K1, ...), in which the projected trajectory (K, K1, ...) deviates from the fixed trajectory (K, K1, ...), for determining a curvature of the surface (0) based on the deviating sections (K'1) and for matching the automatic interpolation as a function of the curvature.

13. Apparatus according to Claim 12, wherein the projection device (15; 15a; 16) has at least one laser light source and a deflecting device for directing at least one laser light beam.

14. Apparatus according to one of Claims 12 or 13, wherein the projection device (15; 15a; 16) and/or the optical detection device (50, 51; 50a, 51a) is/are arranged such that they are stationary with respect to a work space of the robot (2).

15. Apparatus according to one of Claims 12 to 14, wherein the pointer device (10) is formed by a pen that makes contact in a tactile fashion or by a light beam.

## Revendications

1. Procédé pour établir une trajectoire d'un dispositif de robot avec les étapes suivantes:
(a) disposer une pièce d'usinage (1) ayant au moins une surface à usiner (0) dans la zone de travail du dispositif de robot (2),
(b) positionner un dispositif indicateur (10) sur une pluralité de points de référence (P1, P2, ...) sur la surface à usiner (0) et fixer les coordonnées des points de référence (P1, P2, ...) en détectant les coordonnées associées du dispositif indicateur (10) au moyen d'un dispositif de poursuite (11), et
(c) interpoler automatiquement des portions de trajectoire entre deux points de référence voisins respectifs (P1, P2, ...) selon un algorithme prédéterminé pour fixer la trajectoire (K, K1, ...),
**caractérisé par** les étapes de :
(d) projection de la trajectoire (K, K1, ...) sur la surface à usiner (0) au moyen d'un dispositif de projection (15 ; 15a ; 16),
(e) détection optique de la trajectoire projetée (K, K1, ...),
(f) détermination des sections déviantes (K'1) dans lesquelles la trajectoire projetée (K, K1, ...) dévie de la trajectoire fixée (K, K1, ...),
(g) détermination d'une courbure de la surface (0) sur base des sections déviantes (K'1), et
(h) adaptation de l'interpolation automatique en fonction de la courbure.

2. Procédé selon la revendication 1, dans lequel les étapes suivantes sont effectuées avant le positionnement du dispositif indicateur (10) :
- agencement d'un point de calibrage (80) sur le dispositif de robot (2),
- atteinte du point de calibrage (80) par le dispositif de robot (2) en au moins trois poses,
- positionnement respectif du dispositif indicateur (10) sur le point de calibrage (80),
- détection des coordonnées du dispositif indicateur (10) associées à la pose respective, et
- égalisation du système de coordonnées du dispositif de robot (2) et du système de coordonnées du dispositif indicateur (10) sur base des poses atteintes et des coordonnées détectées respectivement associées.

3. Procédé selon la revendication 1, selon lequel les étapes suivantes sont effectuées avant le positionnement du dispositif indicateur (10) :
- agencement d'un point de calibrage (80) sur le dispositif de robot (2),
- atteinte du point de calibrage (80) par le dispositif de robot (2) en au moins trois poses,
- projection respective d'un modèle avec le dispositif de projection (16) dans des directions estimées vers le point de calibrage (80),
- détection du modèle par un dispositif de détection (17),
- détermination d'une direction du dispositif de projection (16) au point de calibrage (80) lors de la pose respective sur base du modèle détecté, et
- égalisation du système de coordonnées du dispositif de robot (2) et du système de coordonnées du dispositif de projection (16) sur base des poses atteintes et des directions respectivement détectées.

4. Procédé selon la revendication 3, dans lequel l'égalisation du système de coordonnées du dispositif indicateur (10) et du système de coordonnées du dispositif de projection (16) s'effectue sur base d'un objet de calibrage qui comporte une pluralité de points de calibrage (80).

5. Procédé selon l'une des revendications précédentes avec les étapes supplémentaires:
- simulation d'un guidage du dispositif de robot (2) le long de la trajectoire fixée (K, K1, ...) sur base d'un modèle cinématique du dispositif de robot (2),
- détermination de premiers points de la trajectoire (K, K1, ...) que le dispositif de robot (2) atteint lors du guidage simulé à des instants prédéterminés, et
- projection de repères temporels (T1, T2, ...) le long de la trajectoire (K, K1, ...) sur les coordonnées des premiers points.

6. Procédé selon l'une des revendications précédentes avec les étapes supplémentaires :
- simulation d'un guidage du dispositif de robot (2) le long de la trajectoire fixée (K, K1, ...) sur base d'un modèle cinématique du dispositif de robot (2),
- détermination de deuxièmes points de la trajectoire (K, K1, ...) pour lesquels le dispositif de robot (2) prend des poses qui entraînent une collision avec la pièce d'usinage (1) et/ou avec un environnement de travail et/ou pour lesquels la simulation indique que les poses ne sont pas prenables par le dispositif de robot (2), et
- projection de repères de collision le long de la trajectoire projetée (K, K1, ...) sur les coordonnées des deuxièmes points.

7. Procédé selon la revendication 6, selon lequel est agencé comme dispositif de projection (15 ; 15a ; 16) un dispositif de projection mobile (15a) près ou à la place d'un manipulateur sur le dispositif de robot (2), et ce de manière fixe ou amovible, selon lequel la surface à usiner (O)est divisée en plusieurs segments (A, B) et pour chaque segment (A, B), le dispositif de projection mobile (15a) est guidé automatiquement dans une pose par le dispositif de robot (2), à partir de laquelle le dispositif de projection mobile (15a) peut projeter sur chaque point du segment choisi (A, B) avant qu'une pluralité de points de référence (P1, P2, ...) dans le segment (A, B) de la surface (0) ne soit fixée par le dispositif indicateur (10) et la détection de celui-ci.

8. Procédé selon la revendication 7, selon lequel une pluralité de points d'orientation (01, 02, ...) est fixée et projetée et au moyen d'un dispositif de projection stationnaire (15b) sur la surface à usiner (0) et selon lequel le dispositif de projection mobile (15a) conjointement à un dispositif de détection optique (50, 51 ; 50a, 51a) est guidé automatiquement dans une pose au moyen du dispositif de robot (2), à partir de laquelle le dispositif de détection optique (50a, 50b) détecte au moins trois points d'orientation (01, 02, ...).

9. Procédé selon la revendication 8, selon lequel un calibrage du dispositif de détection optique (50, 51 ; 50a, 51a) et/ou du dispositif de projection (15 ; 15a ; 16) et/ou du modèle de robot est effectué sur base d'une différence entre les coordonnées fixées des points d'orientation (01, 02, ...) et les coordonnées détectées des points d'orientation projetés (01, 02, ...).

10. Procédé selon la revendication 9, selon lequel une pluralité de repères d'orientation réfléchissants ou luminescents est agençée sur la surface à usiner (0) à des coordonnées connues, le dispositif de détection optique (50, 51; 50a, 51a) détecte les coordonnées des repères d'orientation et un calibrage du dispositif de détection optique (50, 51 ; 50a, 51a) et/ou du dispositif de projection (15 ; 15a ; 16) et/ou du modèle de robot est effectué sur base d'une différence entre les coordonnées connues des repères d'orientation et les coordonnées détectées des repères d'orientation.

11. Procédé selon la revendication 10, selon lequel des repères indicateurs de direction (X1, X2, ...) conformément à l'allure d'orientation le long de la trajectoire (K, K1, ...) sur la surface (0) sont projetés.

12. Dispositif pour la mise en oeuvre du procédé selon l'une des revendications 1 à 11, comportant :
- un dispositif indicateur (10),
- un dispositif de poursuite (11) pour la détection des coordonnées du dispositif indicateur (10) pour fixer les points de référence (P1, P2, ...),
- un dispositif de traitement de données (20) pour l'interpolation automatique de portions de trajectoire entre deux points de référence voisins respectifs (P1, P2, ...) pour fixer la trajectoire (K, K1, ...), **caractérisé par** :
- un dispositif de projection (15 ; 15a ; 16) pour la projection de la trajectoire (K, K1, ...) sur la surface (O), et
- un dispositif de détection optique (50, 51; 50a, 51a) pour la détection de la trajectoire projetée (K, K1, ...),
le dispositif de traitement de données (20) étant conçu pour déterminer des sections déviantes (K'1) de la trajectoire projetée (K, K1, ...) dans lesquelles la trajectoire projetée (K, K1, ...) dévie de la trajectoire fixée (K, K1, ...), pour déterminer une courbure de la surface (0) sur base des sections déviantes (K'1) et pour adapter l'interpolation automatique en fonction de la courbure.

13. Dispositif selon la revendication 12, dans lequel le dispositif de projection (15 ; 15a ; 16) comporte au moins une source de lumière laser et un dispositif de déviation pour diriger au moins un rayon de lumière laser.

14. Dispositif selon l'une des revendications 12 ou 13, dans lequel le dispositif de projection (15 ; 15a ; 16) et/ou le dispositif de détection optique (50, 51 ; 50a, 51a) sont agencés de manière stationnaire par rapport à un espace de travail du robot (2).

15. Dispositif selon l'une des revendications 12 à 14, dans lequel le dispositif indicateur (10) est formé par une tige sensible au contact ou par un rayon lumineux.
